# EUROPEAN PATENT SPECIFICATION

(11) **EP 4 185 414 B1**
(45) Date of publication and mention of the grant of the patent: **09.10.2024**
(21) Application number: 21755194.4
(22) Date of filing: 21.07.2021
(51) Int. Cl.: B21D 5/00, B21D 5/08, C21D 9/00, H05B 6/02, B21B 45/00

(54) **METHOD AND APPARATUS FOR HEATING AND ROLL FORMING A PRODUCT**
VERFAHREN UND VORRICHTUNG ZUM HEIZEN UND ROLLFORMEN EINES PRODUKTS
PROCÉDÉ ET APPAREIL DE CHAUFFAGE ET DE FORMAGE PAR LAMINAGE D'UN PRODUIT

(30) Priority: 22.07.2020 US 202062705911 P; 18.12.2020 US 202063199302 P
(43) Date of publication of application: 31.05.2023
(73) Proprietor: Novelis, Inc., Atlanta, GA 30326 (US)
(72) Inventor: MALPICA, Julio, Kennesaw, Georgia 30144 (US); KAMAT, Rajeev G., Kennesaw, Georgia 30144 (US); JANOFF, Anna E., Kennesaw, Georgia 30144 (US); TALLA, Rajasekhar, Kennesaw, Georgia 30144 (US); WALCZAK, Brian Matthew, Kennesaw, Georgia 30144 (US); ROY, Debdutta, Kennesaw, Georgia 30144 (US); GAENSBAUER, David Anthony, Kennesaw, Georgia 30144 (US); HO, John Min, Kennesaw, Georgia 30144 (US); PEARSON, Cullen, Kennesaw, Georgia 30144 (US); RAIS, Adolfo, Kennesaw, Georgia 30144 (US); KIDWELL, Carolyn Grace, Kennesaw, Georgia 30144 (US); IYER, Natasha, Kennesaw, Georgia 30144 (US); RICHARD, Julie, Kennesaw, Georgia 30144 (US); LEYVRAZ, David, Kennesaw, Georgia 30144 (US); DESPOIS, Aude Celine, Kennesaw, Georgia 30144 (US); KEMPA, Stefan Felix, Kennesaw, Georgia 30144 (US)
(74) Representative: Weickmann & Weickmann PartmbB
(86) International application number: PCT/US2021/042480
(87) International publication number: WO 2022/020417

(56) References cited:
- AT-B- 410 906
- CN-A- 102 527 786
- CN-A- 102 672 014
- DE-A1- 10 055 950
- ES-A1- 2 359 201
- US-A- 4 433 565
- US-A1- 2015 299 818
- US-A1- 2018 171 454

## Description

### FIELD

The present disclosure relates to metallurgy generally and more specifically to roll-forming high strength metal substrates.

### BACKGROUND

A variety of forming processes are useful for transforming flat metal substrates into shaped metal products. In a stamping process, a metal substrate is placed between stamping dies and a force is applied between the dies to form the metal substrate to plastically conform it to raises and recesses present in the stamping dies, typically without extensive thinning of the metal. An example stamping process may correspond to shaping of a sheet metal blank into an automobile door panel. In a drawing process, a metal substrate is placed between a die and a punch and a force is applied to drive the punch through the die and thin the metal as is it drawn into an extended shape. An example drawing process may correspond to shaping of a sheet metal blank into an aluminum cup as part of the can making process. In a roll-forming process, an elongated metal sheet is passed between rollers of a roll-forming stand to create a continuous bend along a length of the elongated metal sheet. Each of these forming processes provides complementary features that may not be available in the others, while there may be some features that can overlap. For example, suitably shaped stamping dies can include portions that draw a metal substrate into an extended shape while other portions can undergo plastic forming.

Some metals and alloys are easily formable, while others may not have suitable formability character. In some cases, formability and strength are inversely related, such that highly formable alloys may not exhibit high strength, while high strength alloys may not be easily formable and may simply fracture or rupture when subjected to forming processes that impart stress or strain beyond a fracture limit of the alloy. Thus, it may be difficult to form high-strength metal substrates into complex shapes.

US 2018/0171454 A1, which is considered to form the basis for the preambles of claims 1 and 8, is directed to a method of roll-forming an aluminum alloy by processing an aluminum alloy plate to form a square bar, the method comprising pressing the plate so that deformation begins in a cross section thereof, and forming the square bar having at least one bent portion by completion of the deformation, and partially performing a heat treatment on the bent portion before forming the square bar.

US 2015/0299818 A1 is directed to a process for roll-forming of high-strength cold-rolled sheet metal comprising feeding high-strength cold-rolled sheet metal continuously between rollers on a roll-forming production line, providing intense heat from a heat source locally prior to bending of the high-strength cold-rolled sheet metal, heating, with the intense heat, the cold-rolled sheet metal to a temperature within a two-phase sub-critical temperature region or above a critical temperature for the high-strength cold-rolled sheet metal, bending the high-strength cold-rolled sheet metal, and quenching the high-strength cold-rolled sheet metal rapidly after bending for the cold-rolled sheet metal to retain a high-temperature phase structure at room temperature.

DE 100 55 950 A1 is directed to a roll forming device with beam tools, wherein the device has a feed arrangement that moves a workpiece in a material transport direction with a bending device for deforming the material as it passes through it and with at least one beam processing device directed towards the passing workpiece. Additionally, the roll forming device may be provided with a heating device directed towards the workpiece to heat it at least in some areas. ES 2 359 201 A1 is directed to a shaping apparatus and process adapted to form a profile of variable section from a sheet metal, wherein the shaping apparatus comprises at least one shaping means including rollers, arranged opposite each other and movable with respect to the metal sheet, giving rise to the profile comprising at least one flank. The shaping apparatus further comprises heating means, arranged movable with respect to the metal sheet adapting to the corresponding variable sections of the metal sheet. The heating means locally heats a zone of the flank, said zone being a transition zone delimiting a change of cross section of the profile. US 4,433,565 is directed to a method of and apparatus for the continuous manufacture of metal profile members of open or closed construction, especially steel profile members, from a continuous band or strip of metal.

CN 102672014 A is directed to a precision hot roll forming process of high-strength semicircular and large-radio section steel, especially to the hot roll bending-stretching composite process forming method of a U-shaped boom of high-strength steel.

AT 410 906 B is directed to a rolling process for the manufacture of profiles characterized therein that the rolling stock immediately prior feeding into the mating rolls is heated with a laser beam at places where sharp bends are to be produced and thus cracks may occur in the cold condition.

CN 102527786 A is directed to a roll-forming method and device by electromagnetic induction heating between profile passes.

### SUMMARY

The term embodiment and like terms are intended to refer broadly to all of the subject matter of this disclosure and the claims below. Statements containing these terms should be understood not to limit the subject matter described herein or to limit the meaning or scope of the claims below. Embodiments of the present disclosure covered herein are defined by the claims below, not this summary. This summary is a high-level overview of various aspects of the disclosure and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this disclosure, any or all drawings and each claim.

The subject matter of the present invention is defined in the appended claims. The present disclosure provides systems and methods for forming high-strength metal substrates into complex shapes by roll-forming processes. To increase a formability of a high-strength metal substrate, the plasticity of the metal substrate is, at least temporarily, modified by heating the metal prior to or immediately prior to roll-forming to a first temperature.

The roll-forming process forms the metal after the metal to be formed, or a portion of it, cools below the first temperature or to ambient temperature. The roll-forming process may subject the metal to work hardening in the forming process such that after the forming, the formed metal product may continue to exhibit high-strength or, in some cases, even higher strength.

Due, at least in part, to the geometries involved in many roll-forming stand configurations, techniques for heating the metal substrate immediately prior to or between roll-forming operations may be limited. Additionally, it may be desirable to limit the extent of heating of the metal substrate to only those portions that are to be immediately formed in order to minimize any permanent property changes in other portions of the metal substrate that may occur from heating, though in some cases it may be desirable to heat an entirety of the metal substrate. Induction heating is described herein for heating local portions or an entirety of metal substrates prior to or between roll-forming operations, as magnetic sources useful for the heating operations can be sized and shaped to appropriately fit between roll-forming stands or at positions adjacent to a shaped elongated metal substrate and exhibit operational characteristics that provide for highly adjustable and controllable heat generation directly within the metal substrate. Laser heating is described herein for heating local portions or an entirety of metal substrates prior to or between roll-forming operations, as laser sources useful for the heating operations can be sized or positioned to appropriately allow heating between roll-forming stands or at positions adjacent to a shaped elongated metal substrate and exhibit operational characteristics that provide for highly adjustable and controllable heat generation at the metal substrate. The adjustability provided by induction heating and laser heating allows these techniques to be useful for the heating of various different alloys and metals to achieve exact temperatures needed to modify formability characteristics for the roll-forming process without sacrificing strength or other properties. In addition, the precisely controllable heating offered by induction heating or laser heating according to the present disclosure may also allow other properties of the metal to be modified during roll-forming, such as a temper condition or a corrosion resistance character.

In one aspect, methods of making metal products are disclosed. The method according to the invention comprises exposing an elongated metal substrate, which is a metal sheet, shate or plate, to a first time-varying magnetic field to heat at least a first portion of the elongated metal substrate by induction heating or exposing the elongated metal substrate to laser radiation. The heating occurs while the elongated metal substrate is moved along a rolling direction past a first magnetic field source generating the first time-varying magnetic field or past a first laser source generating laser radiation. The first time-varying magnetic field or laser radiation heats the first portion of the elongated metal substrate to or above a first temperature sufficient to increase formability or plasticity of at least the first portion of the elongated metal substrate, at least temporarily (e.g., while the substrate is heated to or above the first temperature). In some cases, the formability or plasticity of at least the first portion of the elongated metal substrate may be altered from adjacent portions of the elongated metal substrate. Various different metal alloys may exhibit or require different temperatures for modifying formability or plasticity. After heating, the elongated metal substrate is passed between at least two rollers of a first roll-forming stand to bend the first portion of the elongated metal substrate after the at least the first portion of the elongated metal substrate cools from the first temperature. The first temperature is from 150 °C to 250 °C.

In various embodiments, the metal substrate comprises aluminum, an aluminum alloy, a steel alloy, stainless steel, magnesium, a magnesium alloy, copper, a copper alloy, titanium, or a titanium alloy. Optionally, the metal substrate comprises a 3xxx series aluminum alloy, a 5xxx series aluminum alloy, a 6xxx series aluminum alloy, or a 7xxx series aluminum alloy.

In some cases, the first temperature may be alloy dependent. In some examples, the first temperature may be from 150 °C to 160 °C, from 160 °C to 170 °C, from 170 °C to 180 °C, from 180 °C to 190 °C, from 190 °C to 200 °C, from 200 °C to 210 °C, from 210 °C to 220 °C, from 220 °C to 230 °C, from 230 °C to 240 °C, or from 240 °C to 250 °C when the elongated metal substrate comprises a 7xxx series alloy.

Forming or bending operations may be limited by a ratio of the bend radius (r) to the thickness (t) of the substrate, or r/t. Different metals and alloys may exhibit different r/t lower limits. In some cases, bending a metal substrate to an r/t smaller than an r/t limit may result in rupture or fracture of the substrate. In some embodiments, the first roll-forming stand bends the first portion of the elongated metal substrate to form a metal product having a feature with a ratio of bend radius to thickness (r/t) of from 0.1 to 2, such as from 0.1 to 0.5, from 0.1 to 1, from 0.1 to 1.5, from 0.5 to 1, from 0.5 to 1, from 0.5 to 1.5, from 0.5 to 2, from 1 to 1.5, from 1 to 2, or from 1.5 to 2.

Heating of the elongated metal substrate may result in other changes to the metal beyond changing, at least temporarily, a formability or plasticity of the metal substrate. For example, the first time-varying magnetic field or the laser radiation may heat at least the first portion of the elongated metal substrate to or above a second temperature for a sufficient time duration to modify a temper of the first portion of the elongated metal substrate. As an example, the first time-varying magnetic field or the laser radiation may heat at least the first portion of the elongated metal substrate to overage at least the first portion of the elongated metal substrate. Optionally, the first time-varying magnetic field or the laser radiation heats at least the first portion of the elongated metal substrate and modifies a corrosion resistance of at least the first portion of the elongated metal substrate. In some cases, the first time-varying magnetic field or the laser radiation heats an entirety of the elongated metal substrate and optionally modifies properties of the entirety of the elongated metal substrate.

Various operational parameters may be used to control the generation of heat in the elongated metal substrate. For example, a distance between the first magnetic field source and the elongated metal substrate may be adjusted to control a rate of heat generated in the elongated metal substrate by the induction heating. Optionally, the distance between the first magnetic field source and the elongated metal substrate ranges from 1 mm to 100 mm, such as from 1 mm to 3 mm, from 1 mm to 5 mm, from 1 mm to 10 mm, from 1 mm to 30 mm, from 1 mm to 40 mm, from 1 mm to 50 mm, from 1 mm to 60 mm, from 1 mm to 70 mm, from 1 mm to 80 mm, from 1 mm to 90 mm, from 3 mm to 5 mm, from 3 mm to 10 mm, from 3 mm to 30 mm, from 3 mm to 40 mm, from 3 mm to 50 mm, from 3 mm to 60 mm, from 3 mm to 70 mm, from 3 mm to 80 mm, from 3 mm to 90 mm, from 3 mm to 100 mm, from 5 mm to 10 mm, from 5 mm to 30 mm, from 5 mm to 40 mm, from 5 mm to 50 mm, from 5 mm to 60 mm, from 5 mm to 70 mm, from 5 mm to 80 mm, from 5 mm to 90 mm, from 5 mm to 100 mm, from 10 mm to 30 mm, from 10 mm to 40 mm, from 10 mm to 50 mm, from 10 mm to 60 mm, from 10 mm to 70 mm, from 10 mm to 80 mm, from 10 mm to 90 mm, from 10 mm to 100 mm, from 30 mm to 40 mm, from 30 mm to 50 mm, from 30 mm to 60 mm, from 30 mm to 70 mm, from 30 mm to 80 mm, from 30 mm to 90 mm, from 30 mm to 100 mm, from 40 mm to 50 mm, from 40 mm to 60 mm, from 40 mm to 70 mm, from 40 mm to 80 mm, from 40 mm to 90 mm, from 40 mm to 100 mm, from 50 mm to 60 mm, from 50 mm to 70 mm, from 50 mm to 80 mm, from 50 mm to 90 mm, from 50 mm to 100 mm, from 60 mm to 70 mm, from 60 mm to 80 mm, from 60 mm to 90 mm, from 60 mm to 100 mm, from 70 mm to 80 mm, from 70 mm to 90 mm, from 70 mm to 100 mm, from 80 mm to 90 mm, from 80 mm to 100 mm, or from 90 mm to 100 mm. A power of the laser radiation may control a rate of heat generated at the elongated metal substrate. A spot size or line width of the laser radiation may control a rate of heat generated at the elongated metal substrate. Example spot sizes may be from 5 mm to 50 mm, such as from 5 mm to 10 mm, from 10 mm to 15 mm, from 15 mm to 20 mm, from 20 mm to 25 mm, from 25 mm to 30 mm, from 30 mm to 35 mm from 35 mm to 40 mm, from 40 mm to 45 mm, or from 45 mm to 50 mm. Depending, at least in part on the system geometries and the rolling speed of the elongated metal substrate, an exposure time of the elongated metal substrate to the first time-varying magnetic field or the laser radiation may be from 0.1 seconds to 600 seconds, such as from 0.1 seconds to 500 seconds, from 0.1 seconds to 400 seconds, from 0.1 seconds to 300 seconds, from 0.1 seconds to 200 seconds, from 0.1 seconds to 100 seconds, from 0.1 seconds to 50 seconds, from 0.1 seconds to 10 seconds, form 0.1 seconds to 5 seconds, from 0.1 seconds to 1 second, from 1 second to 600 seconds, from 1 second to 500 seconds, from 1 second to 400 seconds, from 1 second to 300 seconds, from 1 second to 200 seconds, from 1 second to 100 seconds, from 1 second to 50 seconds, from 1 second to 10 seconds, form 1 second to 5 seconds, from 5 seconds to 600 seconds, from 5 seconds to 500 seconds, from 5 seconds to 400 seconds, from 5 seconds to 300 seconds, from 5 seconds to 200 seconds, from 5 seconds to 100 seconds, from 5 seconds to 50 seconds, from 5 seconds to 10 seconds, from 10 seconds to 600 seconds, from 10 seconds to 500 seconds, from 10 seconds to 400 seconds, from 10 seconds to 300 seconds, from 10 seconds to 200 seconds, from 10 seconds to 100 seconds, from 10 seconds to 50 seconds, from 50 seconds to 600 seconds, from 50 seconds to 500 seconds, from 50 seconds to 400 seconds, from 50 seconds to 300 seconds, from 50 seconds to 200 seconds, from 50 seconds to 100 seconds, from 100 seconds to 600 seconds, from 100 seconds to 500 seconds, from 100 seconds to 400 seconds, from 100 seconds to 300 seconds, from 100 seconds to 200 seconds, from 200 seconds to 600 seconds, from 200 seconds to 500 seconds, from 200 seconds to 400 seconds, from 200 seconds to 300 seconds, from 300 seconds to 600 seconds, from 300 seconds to 500 seconds, from 300 seconds to 400 seconds, from 400 seconds to 600 seconds, from 400 seconds to 500 seconds, or from 500 seconds to 600 seconds.

In some embodiments, the magnetic field source comprises one or more permanent magnet coupled to a motor or rotor for rotating the permanent magnet. Optionally, a permanent magnet is a cylindrical magnet and the permanent magnet is rotated about a cylindrical axis. Optionally, a permanent magnet is a plurality of individual permanent magnets arranged about a rotor in a cylindrical or spaced configuration. Useful cylindrical magnets include those exhibiting diametric cylindrical magnets (e.g., where opposing magnetic poles are on opposite diametric sides of the magnet). Multipoled cylindrical magnets may also be useful. In some examples, multiple individual permanent magnets are arranged about an axis, such as where 4, 5, 6, 7, 8, 9, 10, 11, 12, 13, 14, 15, 16 or more magnets are arranged about the axis, such as where poles of adjacent individual permanent magnets are positioned opposite to one another. Optionally, the motor has an adjustable speed for controlling the time-varying magnetic field. As an example, the motor may have a controllable rotation speed of from 1 revolution per minute to 30000 revolutions per minute, such as from 10 revolutions per minute to 30000 revolutions per minute, from 100 revolutions per minute to 30000 revolutions per minute, from 1000 revolutions per minute to 30000 revolutions per minute, from 10000 revolutions per minute to 30000 revolutions per minute, from 1 revolution per minute to 10000 revolutions per minute, from 10 revolutions per minute to 10000 revolutions per minute, from 100 revolutions per minute to 10000 revolutions per minute, from 1000 revolutions per minute to 10000 revolutions per minute, from 1 revolution per minute to 1000 revolutions per minute, from 10 revolutions per minute to 1000 revolutions per minute, from 100 revolutions per minute to 1000 revolutions per minute, from 1 revolution per minute to 100 revolutions per minute, from 10 revolutions per minute to 100 revolutions per minute, or from 1 revolutions per minute to 10 revolutions per minute. Permanent magnets of different strengths may be used as the magnetic field source. For example, useful permanent magnets include those having a surface field strength of from 1000 Gauss to 10000 Gauss, such as from 1000 Gauss to 2000 gauss, from 1000 Gauss to 5000 Gauss, from 2000 Gauss to 5000 Gauss, from 2000 gauss to 10000 Gauss, or from 5000 Gauss to 10000 Gauss. Useful permanent magnets include those having a residual flux density of from 10000 Gauss to 15000 Gauss, such as from 10000 Gauss to 12500 Gauss or from 12500 Gauss to 15000 Gauss. In some embodiments, the magnetic field source comprises one or more electromagnetic coils and one or more power supplies electrically coupled to the electromagnetic coils. Optionally, the power supply has one or more of a variable output voltage, a variable output current, or a variable output frequency for controlling the time-varying magnetic field. Combinations of electromagnetic coils and rotating permanent magnets may be employed.

Multiple magnetic field sources and/or laser sources may be placed in a tandem or series arrangement, such as two, three, or more magnetic field sources and/or laser sources, allowing for exposure of the elongated metal substrate to multiple time-varying magnetic fields and laser radiation exposures to provide for more controllable heat generation at or within the elongated metal substrate and/or for a more controllable temperature profile, such as more controllable than could be achieved with only a single source. Such a configuration may allow a two, or more, step heating process for portions of the elongated metal substrate, for example. When multiple heat sources (e.g., magnetic field sources and/or laser sources) are used, sources may be positioned directly adjacent to one another on the same side of the elongated metal substrate, such that the elongated metal substrate encounters a first heat generation process (e.g., a first time-varying magnetic field generated by the first magnetic field source or first exposure to laser radiation generated by a first laser source) followed directly by a second heat generation process (e.g., a second time-varying magnetic field generated by second magnetic field source or a second exposure to laser radiation generated by a second laser source), for example. Optionally, multiple magnetic field sources and/or laser sources may be positioned on opposite sides of the elongated metal substrate, which may be useful, for example, for controlling spatial arrangements of components in a roll forming stand. In some cases, multiple magnetic field sources and/or laser sources may be positioned across a width of the elongated metal substrate, such as to provide for separate heating of separate lateral portions of the elongated metal substrate or to provide for a more complex heating/temperature profile across a width of the elongated metal substrate.

Multiple roll-forming operations can optionally be used with the methods of this aspect, with each roll-forming operation optionally preceded by one or more separate induction heating processes or laser heating processes for heating a portion of the elongated metal substrate for the roll-forming. In some embodiments, a method of this aspect comprises exposing the elongated metal substrate to a second or subsequent time-varying magnetic field or second or subsequent laser radiation to heat a second or subsequent portion of the elongated metal substrate by induction heating or laser heating as the elongated metal substrate is moved along the rolling direction past a second or subsequent magnetic field source generating the second or subsequent time-varying magnetic field or a second or subsequent laser source generating the second or subsequent laser radiation. The second or subsequent time-varying magnetic field or second or subsequent laser radiation may heat the second or subsequent portion of the elongated metal substrate to or above a second or subsequent temperature sufficient to increase formability or plasticity of the second or subsequent portion of the elongated metal substrate after the first portion of the elongated metal substrate is bent by the at least two rollers of the first roll-forming stand.

Systems for making metal products are also described herein. The system for making a metal product according to the invention comprises a first magnetic field source positioned to expose an elongated metal substrate, which is a metal sheet, shate or plate, to a first time-varying magnetic field and heat at least a first portion of the elongated metal substrate by induction heating as the elongated metal substrate is moved along a rolling direction past the first magnetic field source, and a first roll-forming stand positioned to receive the elongated metal substrate after exposure to the first time-varying magnetic field. The first time-varying magnetic field heats at least the first portion of the elongated metal substrate to or above a first temperature sufficient to increase formability or plasticity of the first portion of the elongated metal substrate. In an alternative, the system for making a metal product according to the invention comprises a first laser source positioned to expose an elongated metal substrate, which is a metal sheet, shate or plate, to a first laser radiation to heat at least a first portion of the elongated metal substrate by laser heating as the elongated metal substrate is moved along a rolling direction past the first laser source, and a first roll-forming stand positioned to receive the elongated metal substrate after exposure to the first laser radiation. The first laser radiation heats at least the first portion of the elongated metal substrate to or above a first temperature sufficient to increase formability or plasticity of the first portion of the elongated metal substrate. The roll-forming stand comprises at least two rollers arranged to receive the elongated metal substrate and bend the first portion of the elongated metal substrate while at least the first portion of the elongated metal substrate is cooled below the first temperature or to ambient temperature. The systems described may be used to perform the methods described herein. Formed metal products are also provided herein. For example, metal products may be formed using any of the methods described herein or any of the systems described herein. In some embodiments, a formed metal product may comprise an automotive structural product.

Other objects and advantages will be apparent from the following detailed description of non-limiting examples.

### BRIEF DESCRIPTION OF THE FIGURES

The specification makes reference to the following appended figures, in which use of like reference numerals in different figures is intended to illustrate like or analogous components.
FIG. 1 provides a schematic illustration of a series of roll-forming stands and induction and laser heating systems for roll-forming of an elongated metal substrate.
FIG. 2A, FIG. 2B, and FIG. 2C provide schematic illustrations of roll-forming and induction heating of an elongated metal substrate.
FIG. 3 provides an example plot showing relative temperature of an elongated metal substrate as a function of x position of the metal substrate.
FIG. 4 provides an example plot showing relative temperature of an elongated metal substrate as a function of y position of the metal substrate.
FIG. 5 provides a schematic illustration of progressive roll-forming of an elongated metal substrate using a series of roll-forming stands.
FIG. 6 provides a schematic illustration of a series of roll-forming stands with a rotating magnet induction heating system for pre-heating the elongated metal substrate prior to roll-forming with electromagnetic induction heating systems between some roll-forming stands.
FIG. 7 provides a schematic illustration of progressive roll-forming of an elongated metal substrate after pre-heating using a rotating magnet induction heating system with electromagnetic induction heating systems between some roll-forming stands.
FIG. 8A provides data showing outer bending angle for aluminum samples subjected to rapid heating followed by a bend test. FIG. 8B shows photographs of the aluminum samples after the bend test.

### DETAILED DESCRIPTION

Described herein are systems and methods for performing roll-forming on metal substrates and formed metal products. The metal substrates are subjected to induction heating during the roll-forming process by exposure to time-varying magnetic fields, such as by exposure to a rotating permanent magnet. Heating of the metal substrates allow improved formability or plasticity of the substrate in order to reduce or eliminate damage to the substrate during roll-forming to low bending radius to thickness ratios (r/t). Heating of the metal substrates can also function to temper the substrates, such as to overage the substrates, and form high-strength end products.

High-strength aluminum alloys (e.g., 7xxx series aluminum alloys) can be difficult to form, such as by stamping, drawing, roll-forming, etc. For example, forming such wrought aluminum alloys to a bending radius to thickness ratio (r/t) less than 1.5 can typically result in fracture or damage to the alloy structure. In many cases, formed metal products of high-strength aluminum alloys may not be suitable for some end products because of the low ability of the high-strength aluminum alloy to be formed into the complex shapes needed for the end products. In some cases, aluminum alloys may be extruded into parts having cross sections with low r/t features since the r/t features are the result of an extrusion process rather than a forming process. Accordingly, use of wrought aluminum of high-strength alloys may not generally be suitable for some applications. The present invention, however, overcomes these and other limitations by at least temporarily increasing the formability of wrought aluminum substrates, allowing smaller r/t features to be achieved during a forming process without resulting in damage to the substrate structure, while still retaining high strength in the formed end product.

Wrought end products having dimensions and cross-sections comparable to extruded end products can be formed, for example, by a roll-forming process according to the present disclosure. Roll-forming, as described herein, refers to a process by which an elongated metal substrate is formed by passing the substrate between two rollers to plastically bend or deform the elongated metal substrate. In some cases, multiple rollers can be used for the roll-forming process. In some embodiments, multiple roll-forming stands, each corresponding to a single roll-forming stage, to form the elongated metal substrate into complex cross-sectional shapes. Cross-sectional shapes having low bending radius features are useful, for example, for increasing strength of the end products in a direction perpendicular to the cross-section, making such end products more suitable as structural elements.

As examples, automotive body components, such as pillars, rocker panels, and bumpers may be formed of metal substrates, such as high-strength wrought aluminum substrates, subjected to roll-forming according to the present invention.

The methods and systems described herein for roll-forming wrought metal substrates employ techniques for heating a substrate to improve the formability or plasticity of the substrates to permit bending of portions of the substrates by roll-forming stands. Induction heating is utilized for the heating, as the technique allows precise control over where and what temperature portions of a substrate are heated to, limiting exposure of an entirety of a substrate to elevated temperatures. As an example, only a portion of a substrate that is subjected to roll-forming is heated to increase the formability or plasticity of that portion, while other portions of the substrate are either not heated or only heated to lower temperatures (e.g., at which formability or plasticity does not significantly increase). Since many metals exhibit high thermal conductivities, it can be advantageous to apply heat only to portions of the metal substrate that are to undergo bending by a roll-forming stand in order to minimize the temperature that other portions of the metal may obtain by conduction within the substrate. Heat transfer from the heated substrate to the rollers of the roll-forming stand can also serve to minimize the conduction of heat from the heated portions to other portions of the substrate for which exposure to elevated temperatures is not desired. As another example, an entirety of a substrate that is subjected to roll-forming is heated to increase the formability or plasticity of the entire substrate, such as prior to entering a series of roll-forming stands. Optionally, additional induction heating systems may be positioned between roll-forming stands, such as to maintain a temperature of the substrate. Such a configuration may be useful for avoiding having to heat the entire roll-forming system or for having to have the roll-forming system placed in a heated environment, while still allowing the entirety of the substrate to be at an elevated temperature where formability or plasticity is at a desirable state.

Induction heating is advantageously employed by the techniques, methods, and systems described herein, as the heat is generated directly within the metal substrate, rather than transferred to the metal substrate by convection or conduction. Induction can be achieved by exposing the metal substrate to a time-varying magnetic field, and may also be referred to herein as to electromagnetic induction and/or magnetic induction. Various magnetic field sources for generating time-varying magnetic fields are contemplated, including rotating permanent magnets or electromagnetic coils energized by alternating currents. Different advantages may arise through use of different magnetic field sources. For example, use of rotating permanent magnets does not require a current source, but does require a motor for rotating the permanent magnets. On the other hand, an electromagnetic coil does not require any physically moving parts but can employ complex coil geometries and makes use of a power source for providing alternating current. U.S. patent application no. 15/716,887, filed on September 27, 2017, and published under publication number US 2018/0092163 on March 29, 2018 describes additional details regarding use of rotating magnets for heat generation by induction.

### Definitions and Descriptions

In this description, reference is made to alloys identified by AA numbers and other related designations, such as "series" or "7xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, a plate generally has a thickness of greater than about 15 mm. For example, a plate may refer to an aluminum product having a thickness of greater than about 15 mm, greater than about 20 mm, greater than about 25 mm, greater than about 30 mm, greater than about 35 mm, greater than about 40 mm, greater than about 45 mm, greater than about 50 mm, or greater than about 100 mm.

As used herein, a shate (also referred to as a sheet plate) generally has a thickness of from about 4 mm to about 15 mm. For example, a shate may have a thickness of about 4 mm, about 5 mm, about 6 mm, about 7 mm, about 8 mm, about 9 mm, about 10 mm, about 11 mm, about 12 mm, about 13 mm, about 14 mm, or about 15 mm.

As used herein, a sheet generally refers to an aluminum product having a thickness of less than about 4 mm. For example, a sheet may have a thickness of less than about 4 mm, less than about 3 mm, less than about 2 mm, less than about 1 mm, less than about 0.5 mm, or less than about 0.3 mm (e.g., about 0.2 mm).

Reference may be made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. An Hxx condition or temper, also referred to herein as an H temper, refers to a non-heat treatable aluminum alloy after cold rolling with or without thermal treatment (e.g., annealing). Suitable H tempers include HX1, HX2, HX3 HX4, HX5, HX6, HX7, HX8, or HX9 tempers. A T1 condition or temper refers to an aluminum alloy cooled from hot working and naturally aged (e.g., at room temperature). A T2 condition or temper refers to an aluminum alloy cooled from hot working, cold worked and naturally aged. A T3 condition or temper refers to an aluminum alloy solution heat treated, cold worked, and naturally aged. A T4 condition or temper refers to an aluminum alloy solution heat treated and naturally aged. A T5 condition or temper refers to an aluminum alloy cooled from hot working and artificially aged (at elevated temperatures). A T6 condition or temper refers to an aluminum alloy solution heat treated and artificially aged. A T7 condition or temper refers to an aluminum alloy solution heat treated and artificially overaged. A T8x condition or temper refers to an aluminum alloy solution heat treated, cold worked, and artificially aged. A T9 condition or temper refers to an aluminum alloy solution heat treated, artificially aged, and cold worked. A W condition or temper refers to an aluminum alloy after solution heat treatment.

As used herein, terms such as "cast metal product," "cast product," "cast aluminum alloy product," and the like are interchangeable and refer to a product produced by direct chill casting (including direct chill co-casting) or semi-continuous casting, continuous casting (including, for example, by use of a twin belt caster, a twin roll caster, a block caster, or any other continuous caster), electromagnetic casting, hot top casting, or any other casting method. Cast metal products can be transformed into wrought metal products through one or more working processes, such as one or more hot-rolling or cold-rolling processes, a hammering, or other process in which the grain structure of the cast product is physically modified.

As used herein, the term "wrought metal" is used to provide a distinction with other metal products that are simply cast or extruded into end products without a working process (e.g., rolling). Example wrought metal products include those formed by working a cast product, such as an ingot, into a thinner and longer product through one or more hot rolling and/or cold rolling steps. Example wrought metal products include metal substrates, such as elongated metal substrate, metal plates, metal shates, and metal sheets.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C. As used herein, the meaning of "ambient conditions" can include temperatures of about room temperature, relative humidity of from about 20% to about 100%, and barometric pressure of from about 975 millibar (mbar) to about 1050 mbar. For example, relative humidity can be about 20%, about 21%, about 22%, about 23%, about 24%, about 25%, about 26%, about 27%, about 28%, about 29%, about 30%, about 31%, about 32%, about 33%, about 34%, about 35%, about 36%, about 37%, about 38%, about 39%, about 40%, about 41%, about 42%, about 43%, about 44%, about 45%, about 46%, about 47%, about 48%, about 49%, about 50%, about 51%, about 52%, about 53%, about 54%, about 55%, about 56%, about 57%, about 58%, about 59%, about 60%, about 61%, about 62%, about 63%, about 64%, about 65%, about 66%, about 67%, about 68%, about 69%, about 70%, about 71%, about 72%, about 73%, about 74%, about 75%, about 76%, about 77%, about 78%, about 79%, about 80%, about 81%, about 82%, about 83%, about 84%, about 85%, about 86%, about 87%, about 88%, about 89%, about 90%, about 91%, about 92%, about 93%, about 94%, about 95%, about 96%, about 97%, about 98%, about 99%, about 100%, or anywhere in between. For example, barometric pressure can be about 975 mbar, about 980 mbar, about 985 mbar, about 990 mbar, about 995 mbar, about 1000 mbar, about 1005 mbar, about 1010 mbar, about 1015 mbar, about 1020 mbar, about 1025 mbar, about 1030 mbar, about 1035 mbar, about 1040 mbar, about 1045 mbar, about 1050 mbar, or anywhere in between.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10. Unless stated otherwise, the expression "up to" when referring to the compositional amount of an element means that element is optional and includes a zero percent composition of that particular element.

### Methods of Producing Metal Substrates

The metal substrates described and utilized herein can be produced by first casting a molten metal using any suitable casting method. As a few non-limiting examples, the casting process can include a Direct Chill (DC) casting process or a Continuous Casting (CC) process. The continuous casting system can include a pair of moving opposed casting surfaces (e.g., moving opposed belts, rolls or blocks), a casting cavity between the pair of moving opposed casting surfaces, and a molten metal injector. The molten metal injector can have an end opening from which molten metal can exit the molten metal injector and be injected into the casting cavity.

Example metal substrates may comprise steel, aluminum alloys, magnesium and magnesium alloys, titanium and titanium alloys. Useful aluminum alloys include heat-treatable alloys and non-heat-treatable alloys. Example aluminum alloys include, but are not limited to, 3xxx series aluminum alloys, 5xxx series aluminum alloys, and 7xxx series aluminum alloys. In some cases, 4xxx series aluminum alloys or 6xxx series aluminum alloys may be useful aluminum alloys.

A cast product can then be processed by any suitable means to work the cast product into a wrought metal product. For example, the processing steps can be used to prepare plates, shates, or sheets. Such processing steps include, but are not limited to, homogenization, hot rolling, cold rolling, solution heat treatment, and an optional pre-aging step.

### Methods and Systems for Making Metal Products

Metal substrates, such as metal sheets, shates, and plates, may be used to make metal products through one or more roll-forming processes. Roll-forming refers to a process in which a metal substrate, such as an elongated metal substrate, is subjected to a bending operation where two or more rollers force the elongated metal substrate to undergo plastic deformation along a longitudinal or rolling axis of the substrate as it moves between the rollers. Elongated metal substrates are typically used, as roll-forming can be a continuous or semi-continuous process in which long lengths of metal substrates are processed to bend the metal substrate the same way along a longitudinal (i.e., the longest) axis of the substrate. As used herein, an elongated metal substrate refers to a metal substrate having a length that is greater than a width. In some cases, a length of an elongated metal substrate may be 1.5-1000 times (or more) the width of the substrate. For example, a metal coil may be hundreds of meters long, but only a few or a fraction of a meter wide and bent, by roll-forming, at a point along its width but entirely along its length by roll-forming. In some cases, an elongated metal substrate may be referred to as a metal strip. Metal substrates subjected to roll-forming may be referred to herein as roll-formed products or roll-formed metal products.

Metal sheets are a primary subject of roll-forming, since they exhibit lower thicknesses and can typically withstand bending to lower bending radii than metal shates and plates, which have an overall greater thickness. In some cases, however, metal shates and metal plates can be subjected to roll-forming, particularly when formed into products with larger bending radius features. Bending operations can be characterized by a ratio of the bending radius to the thickness (r/t). Bending can impart both compressive and tensile stresses and strains to a metal substrate and, depending on the strength and composition of the metal, the bent metal substrate can fracture, tear, or otherwise rupture during the bending process if bent to form a small r/t feature. Softer or more ductile metals can typically withstand bending to smaller r/t features than stronger or less formable metals.

The present invention, however, allows for metal substrates of higher strength to be roll-formed into smaller r/t features than the intrinsic strength and formability character of the metal alone may dictate. For example, 7xxx series aluminum in a T4 or T6 temper may be difficult to form into a product having low r/t features, but this obstacle is overcome by the presently disclosed systems and methods.

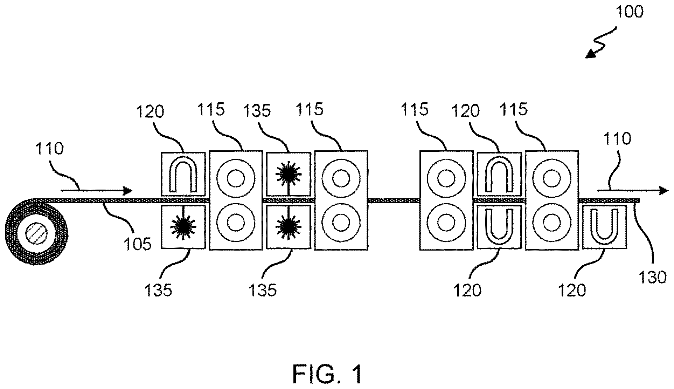

FIG. 1 provides a schematic illustration of a system 100 for making metal products. Elongated metal substrate 105 is shown moving along direction 110 through system 100. System 100 includes a plurality of roll-forming stands 115, a plurality of magnetic field sources 120, and a plurality of laser sources 135. A bent metal product 130 exits the system 100 after all roll-forming stands 115. Although elongated metal substrate 105 is shown as originating from a coil, other configurations may include processing elongated metal substrate as a metal blank or a metal strip.

Each roll-forming stand 115 includes two or more rollers driven along independent rotation axes in a configuration to receive and pass elongated metal substrate 105 between the rollers. The rollers may include roller surfaces with surface profiles relatively oriented with respect to each other for bending, in a direction different from direction 110, the elongated metal substrate 105 as it passes between the rollers along direction 110. Optionally, each roll-forming stand 115 includes a top roller having a top rotation axis and a top roller surface and a bottom roller having a bottom rotation axis and a bottom roller surface. Optionally, other roller configurations may be included in a roll-forming stand 115, such as a forming roller oriented with respect to a top roller or a bottom roller with a rotation axis and surface profile positioned relative to other rollers to bend the elongated metal substrate as it passes through the roll-forming stand 115. Each roll-forming stand 115 may be different from other roll-forming stands 115, such as to allow for different bend operations to occur at each roll-forming stand 115.

Each magnetic field source 120 generates a time-varying magnetic field to heat a portion of elongated metal substrate 105 via induction heating. Each laser source 130 generates laser radiation and exposes and heats a portion of elongated metal substrate 105 via laser heating. Depending on the configuration, different portions of elongated metal substrate 105 may be heated by the different magnetic field sources 120 and/or laser sources 135. The magnetic field sources 120 and/or laser sources 135 are positioned before and optionally after roll-forming stands 115. In some cases, magnetic field sources 120 and/or laser sources 135 may not be positioned before or after every roll-forming stand 115. The magnetic field sources 120 and/or laser sources 135 may be independently positioned on a top side or bottom side of the elongated metal substrate 105. A position of the magnetic field sources 120 and/or laser sources 135 may, at least in part, be governed by the particular bend operation achieved by the roll-forming stands 115. For example, an interior bend surface of elongated metal substrate 105 may face an magnetic field source 120 and/or laser source 135 positioned before and/or after a roll-forming stand 115. As another example, in some cases, an exterior bend surface of elongated metal substrate 105 may face an magnetic field source 120 and/or laser source 135 positioned before and/or after a roll-forming stand 115. Although a combination of magnetic field sources 120 and laser source 135 are shown in system 100, magnetic field sources 120 and laser source 135 may be used alone or in any combination in any desirable number. For example, system 100 may comprise one or multiple magnetic field sources 120 and no laser sources 135. As another example, system 100 may comprise one or multiple laser sources 135 and no magnetic field sources 120.

The heating increases a temperature of a portion of elongated metal substrate 105 to or above a temperature sufficient to, temporarily or permanently, increase formability or plasticity of the portion of the elongated metal substrate. In some cases, the heating may be of a sufficient time duration to modify a temper of the portion of the elongated metal substrate 105. Optionally, the heating may overage the portion of the elongated metal substrate 105. Optionally, the heating may modify (e.g., increase) a corrosion resistance of the portion of the elongated metal substrate 105. The temperature of the elongated metal substrate 105 is raised to or above the temperature sufficient to, at least temporarily, increase formability or plasticity of the portion of the elongated metal substrate for any suitable time duration, such as between 0.1 seconds and 600 seconds, 0.1 seconds and 500 seconds, 0.1 seconds and 400 seconds, 0.1 seconds and 300 seconds, 0.1 seconds and 200 seconds, 0.1 seconds and 100 seconds, 0.1 seconds and 50 seconds, 0.1 seconds and 10 seconds, or 0.1 seconds and 5 seconds.

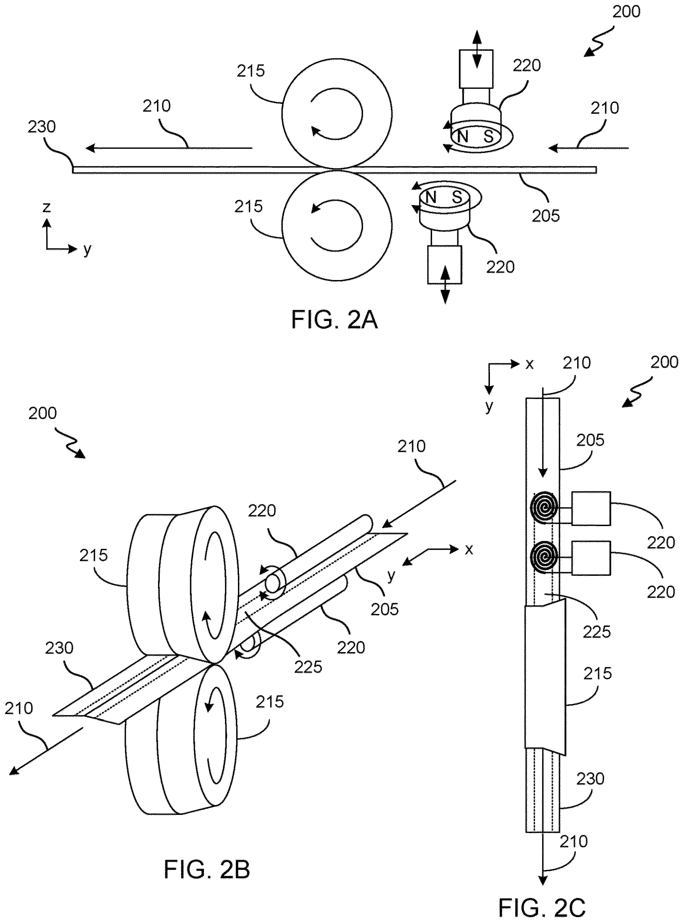

FIG. 2A, FIG. 2B, and FIG. 2C provide schematic illustrations showing a roll-forming process performed by a roll-forming system 200 including a single roll-forming stand. FIG. 2A provides a side view of roll-forming system 200, FIG. 2B provides a perspective view of roll-forming system 200, and FIG. 2C provides a top view of roll-forming system 200. An elongated metal substrate 205 passes along direction 210 (illustrated as parallel to the y-axis) between rollers 215 of a roll-forming stand to form a bent metal product 230. A width of elongated metal substrate 205 is illustrated as parallel to the x-axis, with a thickness of elongated metal substrate 205 illustrated as parallel to the z-axis. Two magnetic field sources 220 are positioned to expose elongated metal substrate 205 to time-varying magnetic fields to heat portion 225 of elongated metal substrate 205 by induction heating.

In FIG. 2A, magnetic field sources 220 are illustrated as rotating permanent magnets coupled to variable speed motors, in which distances (e.g., parallel to the z-axis) between the magnetic field sources 220 and elongated metal substrate 205 can be independently adjusted. An adjustable distance between the magnetic field sources 220 and the elongated metal substrate 205 may be useful for controlling a rate of heat generation in the portion 225 of elongated metal substrate 205 by induction heating.

In FIG. 2B, magnetic field sources 220 are also illustrated as a rotating permanent magnet, but with a different geometry than that shown in FIG. 2A, such as where the rotating permanent magnets are elongated cylindrical magnet (e.g., diametrically magnetized) with a diameter less than the width of elongated metal substrate 205.

In FIG. 2C, magnetic field sources 220 are illustrated as electromagnetic coils. A power supply (not illustrated) may be electrically coupled to the electromagnetic coils. The power supply may have adjustable or variable output voltages, adjustable or variable output currents, and/or adjustable or variable output frequencies for controlling the time-varying magnetic fields and the rate of heat generation in the portion 225 of elongated metal substrate 205.

Although FIGS. 2A-2C show magnetic field sources 220, laser sources may be substituted for any one or more or all of the magnetic field sources 220, without limitation.

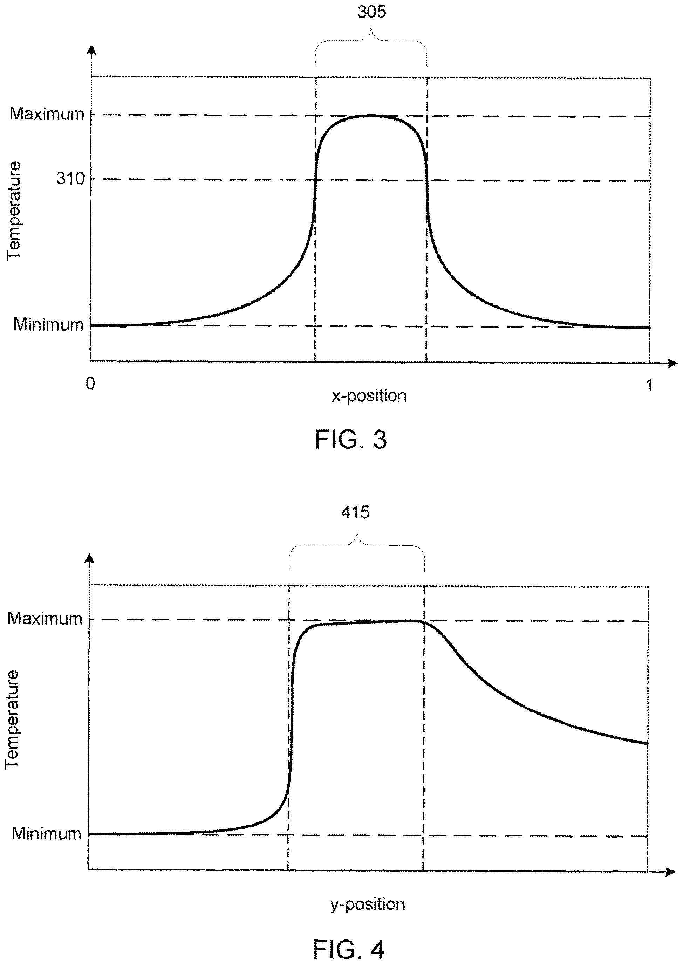

FIG. 3 shows an example temperature distribution of elongated metal substrate along the width (x-axis) achieved by heating using a magnetic field source providing a time-varying magnetic field or laser source providing laser radiation. The y-axis position may correspond to a point immediately following the magnetic field source or laser source or may correspond to a point at which bending by a roll-forming stand occurs, for example. It will be appreciated that the temperature distribution shown in FIG. 3 is merely an example and that other temperature distributions may be used. Various different spatial temperature profiles may be achieved and used for purposes of increasing formability, modifying temper, modifying corrosion resistance, etc. In addition, units are not depicted in FIG. 3 so as to not overly limit or complicate the discussion of temperature within the elongated metal substrate. At the furthest points away from heated portion 305, elongated metal substrate has the minimum temperature, which may correspond to ambient conditions or room temperature or another temperature. The temperature at the edges (x positions equal to 0 and 1) of elongated metal substrate may be higher than ambient conditions, due to heat conduction from heated portion 305 towards the edges of the elongated metal substrate. Within heated portion 305, the temperature may be at or above a suitable temperature 310 for achieving a target formability or plasticity in the heated portion 305 of the elongated metal substrate. In some embodiments, only heated portion 305 is heated above the ambient or minimum temperature, with a relatively uniform temperature across heated portion 305 at a target temperature suitable for a desired formability, a desired plasticity, a desired temper modification, a desired corrosion resistance property modification, etc.

FIG. 4 shows an example temperature distribution of elongated metal substrate along y-axis achieved by heating using a magnetic field source providing a time-varying magnetic field or laser source providing laser radiation. The x-axis position may correspond to a point within region 305 (e.g., a center point within heated portion 305). It will be appreciated that the temperature distribution shown in FIG. 4 is merely an example and that other temperature distributions may be used. Various different spatial temperature profiles may be achieved and used for purposes of increasing formability, modifying temper, modifying corrosion resistance, etc. In addition, units are not depicted in FIG. 4 so as to not overly limit or complicate the discussion of temperature within the elongated metal substrate. The elongated metal substrate may be exposed to the time-varying magnetic field from the magnetic field source or laser radiation from the laser source at region 415. The temperature prior to this may correspond to ambient conditions or room temperature but may alternatively be greater than that due to residual heat left in elongated metal substrate from a prior process (e.g., roll-forming, annealing, electromagnetic heating, etc.). Following region 415, the temperature may decrease by conductive or convective heat loss. Roll-forming takes place immediately following region 415 or takes place at a greater y-position. Optionally, roll-forming takes place before the temperature falls below a target temperature suitable for achieving a desired formability or plasticity. Optionally, roll-forming takes place after the temperature falls back to room temperature or ambient temperature. A length of region 415 may be dictated by a travel speed of the elongated metal substrate and a length or width of the magnetic field source or laser radiation generated by the laser source. Stated another way, an exposure time of the elongated metal substrate may be dictated by a travel speed of the elongated metal substrate and a length or width of the magnetic field source or laser radiation generated by the laser source. In some cases, multiple magnetic field sources or laser sources may be used to increase a length of region 415, which may be useful for achieving a target time duration for subjecting the portion of the elongated metal substrate to increased temperatures.

Different configurations may be utilized to achieve heating for different elongated metal substrates, depending on composition, temper, bend performance (r/t), etc. For example, for elongated metal substrates comprising an aluminum alloy, an alloy composition may dictate or influence the target temperature for the heated portion. In some cases, a thickness of the elongated metal substrate may dictate or influence target temperature for the heated portion.

As an example, for a 3xxx series aluminum alloy, a target temperature for modifying formability, temper condition, corrosion resistance property, etc. is from 150 °C to 250 °C. As another example, for a 4xxx series aluminum alloy, a target temperature for modifying formability, temper condition, corrosion resistance property, etc. is from 150 °C to 250 °C. As another example, for a 5xxx series aluminum alloy, a target temperature for modifying formability, temper condition, corrosion resistance property, etc. is from 150 °C to 250 °C. As another example, for a 6xxx series aluminum alloy, a target temperature for modifying formability, temper condition, corrosion resistance property, etc. is from 150 °C to 250 °C. As another example, for a 7xxx series aluminum alloy, a target temperature for modifying formability, temper condition, corrosion resistance property, etc. is from 150 °C to 250 °C.

To achieve such temperature conditions using a rotating permanent magnet, various operational configurations may be selected that, again, may depend on metal substrate composition, initial and/or desired final temper, bend performance (r/t), initial and/or desired final corrosion resistance condition, etc. As an example, a rotating permanent magnet may have a diameter of between 0.5 cm and 5 cm. As another example, a rotating permanent magnet may have a length or thickness of between 0.5 cm and 30 cm. As another example, a rotating permanent magnet may have a surface field strength of between 1000 Gauss and 10000 Gauss. As another example, a rotating permanent magnet may have a residual flux density of between 10000 Gauss and 15000 Gauss. As another example, a rotating permanent magnet may be rotated at a rate of between 100 revolutions per minute and 30000 revolutions per minute.

In the case of an electromagnetic coil used to heat the elongated metal substrate by induction heating, coil size (diameter, number of turns, etc.) and electrical operational characteristics (current, voltage, frequency) may be selected to achieve a target temperature condition. These characteristics may, again, depend on metal substrate composition, initial and/or desired final temper, bend performance (r/t), initial and/or desired final corrosion resistance condition, etc. As an example, an electromagnetic coil may have a diameter of between 0.5 cm and 30 cm. As an example, an electromagnetic coil may have a number of turns per inch of between 0.5 and 1000. As another example, an electromagnetic coil may be energized using an AC voltage of between 1 V and 1000 V. As another example, an electromagnetic coil may be energized using an AC voltage having a frequency of between 50 Hz and 100 kHz. As another example, an electromagnetic coil may be energized using an AC current of between 1 A and 100 A.

In the case of a laser source generating laser radiation to heat the elongated metal substrate by laser heating, one or more of the laser type, fluence, output power, pulse rate, or spot size may be selected to achieve a target temperature condition. These characteristics may, again, depend on metal substrate composition, initial and/or desired final temper, bend performance (r/t), initial and/or desired final corrosion resistance condition, etc. As examples, any suitable type of laser may be used to generate the laser radiation, such as, but not limited to, diode lasers, fiber lasers, CO₂ lasers, YAG lasers, excimer laser, dye lasers, ion lasers, or the like. Optionally, the laser radiation may have a spot size (e.g., at the elongated metal substrate) of from 1 mm to 10 mm. In some examples a homogenizing or dispersing optic may be used to spread the laser radiation along a line or rectangular focus area, optionally spread across or beyond a full width the elongated metal substrate. Optionally, the laser radiation may have an output power of from 1 W to 5 kW. Optionally, the laser radiation may be delivered to the elongated metal structure using one or more optical elements, such as mirrors, lenses, prisms, waveguides, optical fibers, gratings, filters, beamsplitters, polarizers, or the like.

By way of non-limiting examples, exemplary AA3xxx series alloys for use in the methods described herein can include AA3002, AA3102, AA3003, AA3103, AA3103A, AA3103B, AA3203, AA3403, AA3004, AA3004A, AA3104, AA3204, AA3304, AA3005, AA3005A, AA3105, AA3105A, AA3105B, AA3007, AA3107, AA3207, AA3207A, AA3307, AA3009, AA3010, AA3110, AA3011, AA3012, AA3012A, AA3013, AA3014, AA3015, AA3016, AA3017, AA3019, AA3020, AA3021, AA3025, AA3026, AA3030, AA3130, or AA3065.

Non-limiting exemplary AA4xxx series alloys for use in the methods described herein can include AA4004, AA4104, AA4006, AA4007, AA4008, AA4009, AA4010, AA4013, AA4014, AA4015, AA4015A, AA4115, AA4016, AA4017, AA4018, AA4019, AA4020, AA4021, AA4026, AA4032, AA4043, AA4043A, AA4143, AA4343, AA4643, AA4943, AA4044, AA4045, AA4145, AA4145A, AA4046, AA4047, AA4047A, or AA4147.

Non-limiting exemplary AA5xxx series alloys for use in the methods described herein can include AA5182, AA5183, AA5005, AA5005A, AA5205, AA5305, AA5505, AA5605, AA5006, AA5106, AA5010, AA5110, AA5110A, AA5210, AA5310, AA5016, AA5017, AA5018, AA5018A, AA5019, AA5019A, AA5119, AA5119A, AA5021, AA5022, AA5023, AA5024, AA5026, AA5027, AA5028, AA5040, AA5140, AA5041, AA5042, AA5043, AA5049, AA5149, AA5249, AA5349, AA5449, AA5449A, AA5050, AA5050A, AA5050C, AA5150, AA5051, AA5051A, AA5151, AA5251, AA5251A, AA5351, AA5451, AA5052, AA5252, AA5352, AA5154, AA5154A, AA5154B, AA5154C, AA5254, AA5354, AA5454, AA5554, AA5654, AA5654A, AA5754, AA5854, AA5954, AA5056, AA5356, AA5356A, AA5456, AA5456A, AA5456B, AA5556, AA5556A, AA5556B, AA5556C, AA5257, AA5457, AA5557, AA5657, AA5058, AA5059, AA5070, AA5180, AA5180A, AA5082, AA5182, AA5083, AA5183, AA5183A, AA5283, AA5283A, AA5283B, AA5383, AA5483, AA5086, AA5186, AA5087, AA5187, or AA5088.

Non-limiting exemplary AA6xxx series alloys for use in the methods described herein can include AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6012, AA6012A, AA6013, AA6113, AA6014, AA6015, AA6016, AA6016A, AA6116, AA6018, AA6019, AA6020, AA6021, AA6022, AA6023, AA6024, AA6025, AA6026, AA6027, AA6028, AA6031, AA6032, AA6033, AA6040, AA6041, AA6042, AA6043, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6262, AA6262A, AA6063, AA6063A, AA6463, AA6463A, AA6763, AA6963, AA6064, AA6064A, AA6065, AA6066, AA6068, AA6069, AA6070, AA6081, AA6181, AA6181A, AA6082, AA6082A, AA6182, AA6091, or AA6092.

Non-limiting exemplary AA7xxx series alloys for use in the methods described herein can include AA7011, AA7019, AA7020, AA7021, AA7039, AA7072, AA7075, AA7085, AA7108, AA7108A, AA7015, AA7017, AA7018, AA7019A, AA7024, AA7025, AA7028, AA7030, AA7031, AA7033, AA7035, AA7035A, AA7046, AA7046A, AA7003, AA7004, AA7005, AA7009, AA7010, AA7011, AA7012, AA7014, AA7016, AA7116, AA7122, AA7023, AA7026, AA7029, AA7129, AA7229, AA7032, AA7033, AA7034, AA7036, AA7136, AA7037, AA7040, AA7140, AA7041, AA7049, AA7049A, AA7149, AA7204, AA7249, AA7349, AA7449, AA7050, AA7050A, AA7150, AA7250, AA7055, AA7155, AA7255, AA7056, AA7060, AA7064, AA7065, AA7068, AA7168, AA7175, AA7475, AA7076, AA7178, AA7278, AA7278A, AA7081, AA7181, AA7185, AA7090, AA7093, AA7095, or AA7099.

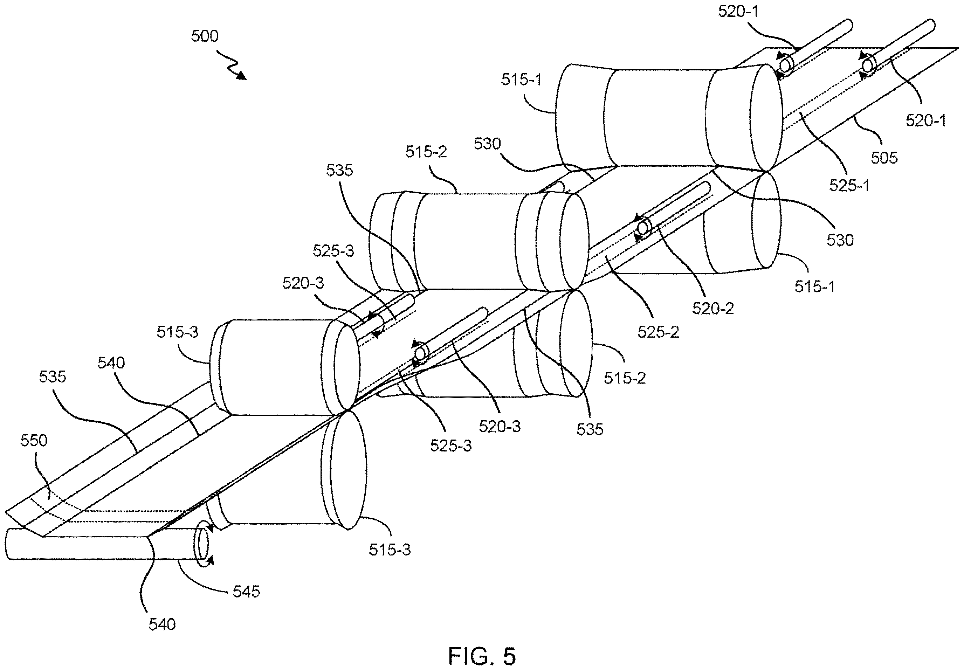

FIG. 5 provides a schematic illustration showing a roll-forming system 500 including three roll-forming stands. As illustrated in FIG. 5, an elongated metal substrate 505 passes between rollers 515-1, 515-2, and 515-3 (collectively, rollers 515) of the roll-forming stands. At each roll-forming stand, elongated metal substrate is roll-formed into a bent configuration. Magnetic field sources 520-1, 520-2, and 520-3 (collectively, magnetic field sources 520) are positioned adjacent to elongated metal substrate 505 to expose elongated metal substrate 505 to time-varying magnetic fields to heat portions 525-1, 525-2, and 525-3 (collectively, portions 525) of elongated metal substrate 505 by induction heating.

Although magnetic field sources 520 are shown as positioned above elongated metal substrate 505, configurations are contemplated where some or all magnetic field sources 520 are positioned below elongated metal substrate 505. Magnetic field sources 520 are illustrated as rotating permanent cylindrical magnets, but other configurations are possible. Each cylindrical magnet may be coupled to a variable speed motor (not illustrated in FIG 5). An adjustable distance between the magnetic field sources 520 and the elongated metal substrate 505 may be useful for controlling a rate of heat generation in the portions 525 of elongated metal substrate 505 by induction heating.

Different positions along the width dimension of elongated metal substrate 505 for each of the magnetic field sources 520 and portions 525 are illustrated in FIG. 5. The positions of magnetic field sources 520 and portions 525 are shown as overlapping with the portion of the elongated metal substrate 505 to be bent by each roll-forming stand. For example, the first roll-forming stand forms first bends 530 in elongated metal substrate 505, which are positioned along the width direction in line with magnetic field sources 520-1 and portions 525-1. The second roll-forming forming stand forms second bends 535 in elongated metal substrate 505, which are positioned along the width direction in line with magnetic field sources 520-2 and portions 525-2. The third bends 540 in elongated metal substrate 505 are shown as overlapping with first bends 530, but have an opposite bend direction. Third bends 540 are positioned along the width direction in line with magnetic field sources 520-3 and portions 525-3.

In FIG. 5, one additional magnetic field source 545 is illustrated after the third roll-forming stand including rollers 515-3. Magnetic field source 545 is oriented to heat portion 550 of elongated metal substrate 505, which extends substantially entirely along the width. Such a configuration may be useful for heating the entirety of elongated metal substrate 505 as it travels past magnetic field source 545. For example, such a configuration may be useful for heating elongated metal substrate 505 to achieve or modify an overall temper condition or to achieve or modify an overall corrosion resistance character.

Although FIG. 5 shows magnetic field sources 520-1, 520-2, 520-3, and 545, laser sources may be substituted for any one or more or all of the magnetic field sources 520-1, 520-2, 520-3, and 545, without limitation.

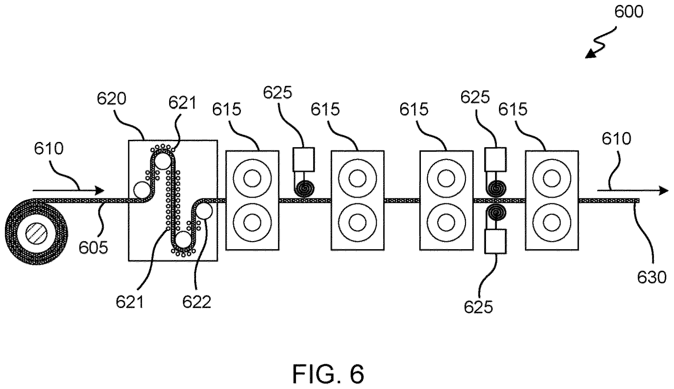

FIG. 6 provides a schematic illustration of another system 600 for making metal products where preheating of an elongated metal substrate 605 using an induction system 620 is used. Elongated metal substrate 605 is shown moving along direction 610 through system 600. Induction system 620 can comprise a series of permanent magnet rotors 621 arranged adjacent to elongated metal substrate 605 as it passes through induction system 620. Induction system 620 can include rollers 622 to allow for drawing the elongated metal substrate 605 along different directions, so as to allow more linear length and space for interaction with permanent magnetic rotors 621 while reducing the footprint of induction system 620. System 600 also includes a plurality of roll-forming stands 615 and optionally includes additional magnetic field sources 625. A bent metal product 630 exits the system 600 after all roll-forming stands 615. Although elongated metal substrate 605 is shown as originating from a coil, other configurations may include processing elongated metal substrate as a metal blank or a metal strip.

Each roll-forming stand 615 may include two or more rollers driven along independent rotation axes in a configuration to receive and pass elongated metal substrate 605 between the rollers. With induction system 620 provided upstream of roll-forming stands 615, a temperature of elongated metal substrate 605 may be raised to a temperature suitable to increase the formability of the elongated metal substrate 605 prior to any roll forming occurring by roll-forming stand 615. In this way, elongated metal substrate 605 can be in a fully preheated condition prior to entering the first roll-forming stand 615.

Each magnetic field source 625 may be used to add additional heat to elongated metal substrate 605 via induction heating. Although magnetic field sources 625 are depicted as electromagnetic coils in FIG. 6, in some cases one or more of the magnetic field sources 625 may comprise rotating permanent magnets, similar to permanent magnetic rotors 621. In some cases, the magnetic field sources 625 can add heat along a full width of the elongated metal substrate 605 as it moves past magnetic field sources 625, for example to maintain a temperature of the elongated metal substrate 605 after preheating by induction system 620 due to heat losses at roll-forming stands 615 or due to heat losses to the environment. In some cases, the magnetic field sources 625 can increase a temperature of the elongated metal substrate to further increase formability character, such as prior to particularly severe deformations that may occur at a roll-forming stand 615. In some cases, heat added by a magnetic field source 625 may be at a local position along the width of the elongated metal substrate 605. As shown, the magnetic field sources 625 may be positioned before and/or after roll-forming stands 615. In some cases, magnetic field sources 625 may not be positioned before or after every roll-forming stand 615. The magnetic field sources 625 may be independently positioned on a top side or bottom side of the elongated metal substrate 605.

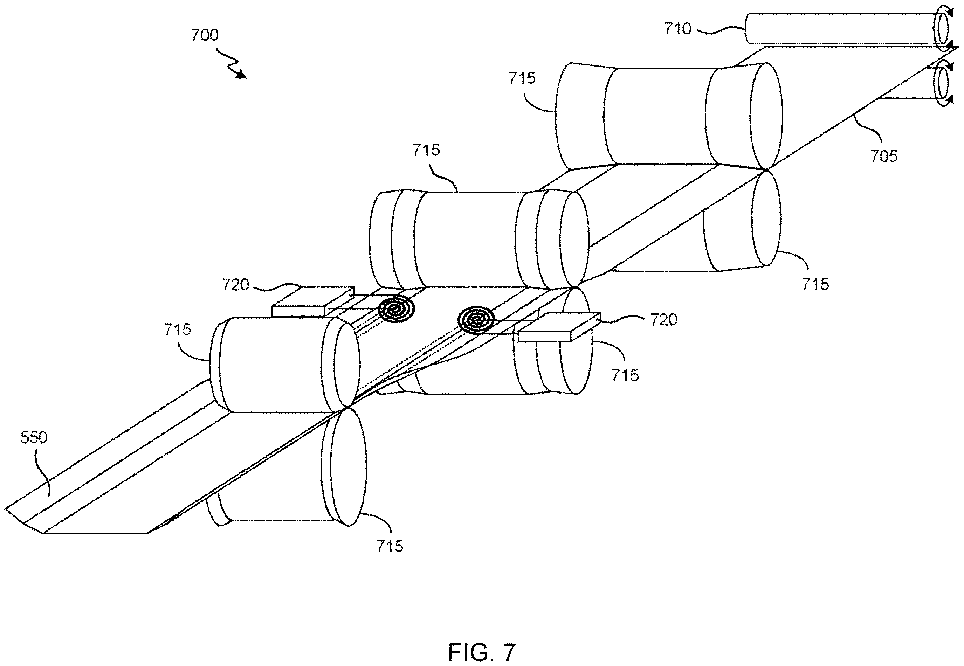

FIG. 7 provides a schematic illustration showing a roll-forming system 700 including three roll-forming stands, similar to roll-forming system 500 shown in FIG. 5. As illustrated in FIG. 7, an elongated metal substrate 705 passes between a pair of permanent magnetic rotors 710 to preheat elongated metal substrate 705 across its full width. Although a single pair of permanent magnetic rotors 710 is shown in FIG. 7, any suitable number of permanent magnetic rotors may be used, with the configuration shown in FIG. 7 simply representing one pair of permanent magnetic rotors 710 or a portion of an induction system comprising multiple permanent magnetic rotors. Examples of an induction system featuring multiple permanent magnetic rotors are described in U.S. Patent Application 15/716,887, filed on September 27, 2017.

After preheating by the pair of permanent magnetic rotors 710, elongated metal substrate 705 passes through rollers 715 of different roll-forming stands. At each roll-forming stand, elongated metal substrate 705 is roll-formed into different bent configurations.

Magnetic field sources 720, depicted as electromagnetic coils, are shown positioned adjacent to elongated metal substrate 705 at various points to expose elongated metal substrate 705 to time-varying magnetic fields to further add heat to elongated metal substrate 705 by induction heating. Although magnetic field sources 720 are shown as positioned above elongated metal substrate 705, configurations are contemplated where some or all magnetic field sources 720 are positioned below elongated metal substrate 705. Although FIG. 7 shows magnetic field sources 720 and permanent magnetic rotors 710, laser sources may be substituted for any one or more or all of the magnetic field sources 720 and permanent magnetic rotors 710, without limitation.

### Methods of Using MetalProducts

The aluminum alloy products described herein can be used in automotive applications and other transportation applications, including aircraft and railway applications. For example, the disclosed aluminum alloy products can be used to prepare automotive structural parts, such as bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloy products and methods described herein can also be used in aircraft or railway vehicle applications, to prepare, for example, external and internal panels.

The aluminum alloy products and methods described herein can also be used in electronics applications. For example, the aluminum alloy products and methods described herein can be used to prepare housings for electronic devices, including mobile phones and tablet computers. In some examples, the aluminum alloy products can be used to prepare housings for the outer casing of mobile phones (e.g., smart phones), tablet bottom chassis, and other portable electronics.

Aspects of the invention may be further understood by reference to the following non-limiting examples.

### EXAMPLE 1

Samples of a 7075 aluminum alloy sheet with a thickness of 2.8 mm were obtained in a T6 temper condition (e.g., by tempering at 125 °C for 24 hours). The samples were subjected to rapid heating to various temperatures under conditions similar to those achieved by induction heating and laser heating, where the temperature was rapidly raised to a target temperature using a fluidized sand bath. Temperatures of 150 °C, 200 °C, 250 °C, and 300 °C were used. As a control, some samples were not subjected to heating.

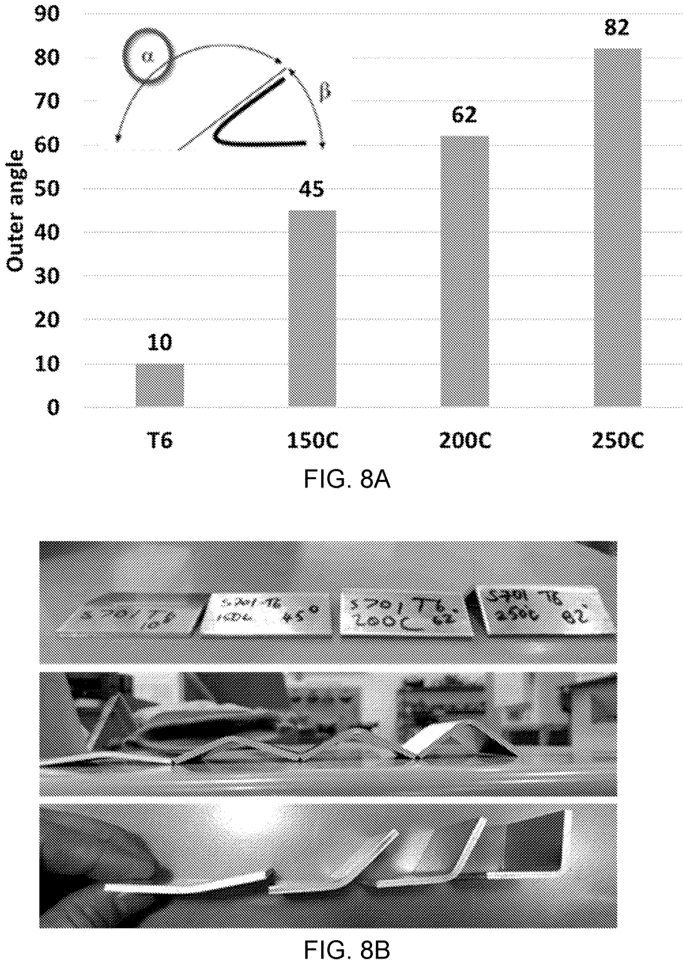

To evaluate the bending performance of the samples under roll-forming conditions, some of the sample samples were subjected to a 3 point bend test after the rapid heating process. Force was logged as a function of vertical displacement, and the test was stopped when the force-displacement curve showed a significant drop. The outer bending angle (α) was measured manually afterwards. FIG. 8A shows results of the bend test for a control sample, a sample heated to 150 °C, a sample heated to 200 °C, and a sample heated to 250 °C. Photographs of the samples after the bend test are shown in FIG. 8B. The sample heated to 250 °C exhibited very high bendability compared to the control sample, indicating that the induction heating or laser heating process described above is useful for improving the bending character of the aluminum during a roll-forming process.

To evaluate the strength performance of the samples, some of the samples were water quenched after the rapid heating process and then subjected to a paint bake cycle, where they were heated and held at 180 °C for 30 minutes. After the paint bake cycle, the samples were subjected to strength testing to determine yield strength and ultimate tensile strength. Results of the strength performance are listed in Table 1.

**Table 1. Strength performance results, *not according to the invention**

| | Rapid Heating | Yield Strength (MPa) | Ultimate Tensile Strength (MPa) |
|---|---|---|---|
| Control Sample: | No Rapid Heating | 503.237 | 560.863 |
| T6 + Paint Bake | | | |
| Test Samples: | 150 °C → Water Quench | 494.400 | 545.800 |
| T6 + Rapid Heating + Paint Bake | 200 °C → Water Quench | 495.700 | 546.130 |
| | 250 °C → Water Quench | 513.030 | 548.500 |
| | 300 °C* → Water Quench | 352.200 | 447.960 |

The strength performance results indicate only minor changes in yield strength and ultimate tensile strength, as compared to the control sample, for the samples subjected to rapid heating up to 250 °C. The sample subjected to rapid heating to 300 °C (not according to the invention), however, showed a substantial drop in both yield strength and ultimate tensile strength.

Together, these bend testing and strength performance results indicate that rapid heating can significantly improve the bending performance while only minimally impacting the strength performance. For this alloy, rapid heating to temperatures up to 250 °C provide an up-to about 8-fold bendability improvement with a very small (e.g., less than 3%) impact on the strength.

The foregoing examples will serve to further illustrate the present invention without, at the same time, however, constituting any limitation thereof. During the studies described herein, conventional procedures were followed, unless otherwise stated. Some of the procedures are described in detail for illustrative purposes.

The foregoing description of the embodiments, including illustrated embodiments, has been presented only for the purpose of illustration and description and is not intended to be exhaustive or limiting to the precise forms disclosed. Numerous modifications, adaptations, and uses thereof will be apparent to those skilled in the art.

## Claims

1. A method of making a metal product (130, 230, 630), comprising:
exposing an elongated metal substrate (105, 205, 505, 605, 705), which is a metal sheet, shate or plate, to a first time-varying magnetic field or first laser radiation to heat at least a first portion (225, 525) of the elongated metal substrate (105, 205, 505, 605, 705) by induction heating or laser heating as the elongated metal substrate (105, 205, 505, 605, 705) is moved along a rolling direction (110, 210) past a first magnetic field source (120, 220, 520, 625, 720) generating the first time-varying magnetic field or laser source (135) generating the first laser radiation, wherein the first time-varying magnetic field or first laser radiation heats at least the first portion (225, 525) of the elongated metal substrate (105, 205, 505, 605, 705) to a first temperature sufficient to increase formability or plasticity of at least the first portion (225, 525) of the elongated metal substrate; wherein the first temperature is from 150 °C to 250 °C,
characterized therein by,
passing the elongated metal substrate (105, 205, 505, 605, 705) between at least two rollers of a first roll-forming stand (115, 215, 515, 615, 715) to bend the first portion (225, 525) of the elongated metal substrate (105, 205, 505, 605, 705), and
that passing the elongated metal substrate (105, 205, 505, 605, 705) between at least two rollers of the first roll-forming stand (115, 215, 515, 615, 715) to bend the first portion (225, 525) of the elongated metal substrate (105, 205, 505, 605, 705) occurs after the first portion (225, 525) of the elongated metal substrate (105, 205, 505, 605, 705) cools below the first temperature or to ambient temperature.

2. The method of claim 1, wherein exposing the elongated metal substrate (105, 205, 505, 605, 705) to the first time-varying magnetic field or the first laser radiation heats an entirety of the elongated metal substrate (105, 205, 505, 605, 705) to the first temperature prior to passing the elongated metal substrate (105, 205, 505, 605, 705) between the at least two rollers of the roll-forming stand (115, 215, 515, 615, 715).

3. The method of any one of claims 1-2, wherein a temperature of the roll-forming stand (115, 215, 515, 615, 715) or the at least two rollers of the roll-forming stand (115, 215, 515, 615, 715) is less than the first temperature; and/or
wherein the first roll-forming stand (115, 215, 515, 615, 715) bends the first portion (225, 525) of the elongated metal substrate (105, 205, 505, 605, 705) to form a metal product having a feature with a ratio of bend radius to thickness (r/t) of from 0.1 to 2; and/or
wherein the first time-varying magnetic field or first laser radiation heats at least the first portion (225, 525) of the elongated metal substrate (105, 205, 505, 605, 705) to or above a second temperature for a sufficient time duration to modify a temper of the first portion (225, 525) of the elongated metal substrate (105, 205, 505, 605, 705); and/or
wherein the first time-varying magnetic field or first laser radiation heats at least the first portion (225, 525) of the elongated metal substrate (105, 205, 505, 605, 705) and overages at least the first portion (225, 525) of the elongated metal substrate (105, 205, 505, 605, 705); and/or
wherein the first time-varying magnetic field or first laser radiation heats at least the first portion (225, 525) of the elongated metal substrate (105, 205, 505, 605, 705) and modifies a corrosion resistance of at least the first portion (225, 525) of the elongated metal substrate (105, 205, 505, 605, 705); and/or
further comprising adjusting a distance between the first magnetic field source (120, 220, 520, 625, 720) and the elongated metal substrate (105, 205, 505, 605, 705) to control a rate of heat generated in the elongated metal substrate (105, 205, 505, 605, 705) by the induction heating; and in particular wherein the distance between the first magnetic field source (120, 220, 520, 625, 720) and the elongated metal substrate (105, 205, 505, 605, 705) ranges from 1 mm to 60 mm.

4. The method of any one of claims 1-3, wherein the first magnetic field source (120, 220, 520, 625, 720) comprises one or more permanent magnets coupled to one or more motors for rotating the one or more permanent magnets.

5. The method of claim 4, wherein the one or more permanent magnets are arranged about a cylindrical structure, and wherein the cylindrical structure is rotated about a cylindrical axis to expose the elongated metal substrate (105, 205, 505, 605, 705) to the first time-varying magnetic field; and/or
wherein the one or more motors have adjustable speeds for controlling the first time-varying magnetic field; and/or
wherein the one or more motors have rotation speeds of from 100 revolutions per minute to 30000 revolutions per minute; and/or
wherein the one or more permanent magnets have surface field strengths of from 1000 Gauss to 10000 Gauss; and/or
wherein the one or more permanent magnets have residual flux densities of from 10000 Gauss to 15000 Gauss.

6. The method of any one of claims 1-5, wherein an exposure time of the elongated metal substrate (105, 205, 505, 605, 705) to the first time-varying magnetic field or first laser radiation is from 0.1 seconds to 300 seconds; and/or
wherein the first magnetic field source (120, 220, 520, 625, 720) comprises one or more electromagnetic coils and one or more power supplies electrically coupled to the one or more electromagnetic coils; and in particular wherein the one or more power supplies have one or more of a variable output voltage, a variable output current, or a variable output frequency for controlling the first time-varying magnetic field.

7. The method of any one of claims 1-6, further comprising:
exposing the elongated metal substrate (105, 205, 505, 605, 705) to a second time-varying magnetic field or second laser radiation to heat a second portion (525) of the elongated metal substrate (105, 205, 505, 605, 705) by induction heating or laser heating as the elongated metal substrate (105, 205, 505, 605, 705) is moved along the rolling direction (110, 210) past a second magnetic field source (120, 220, 520, 625, 720) that generates the second time-varying magnetic field or a second laser source (135) that generates the second laser radiation, wherein the second time-varying magnetic field or second laser radiation heats the second portion (525) of the elongated metal surface to or above a second temperature sufficient to increase formability or plasticity of the second portion (525) of the elongated metal substrate (105, 205, 505, 605, 705) after the first portion (525) of the elongated metal substrate (105, 205, 505, 605, 705) is bent by the at least two rollers of the first roll-forming stand (115, 215, 515, 615, 715); and/or
wherein the metal substrate (105, 205, 505, 605, 705) comprises aluminum, an aluminum alloy, a steel alloy, stainless steel, magnesium, a magnesium alloy, copper, a copper alloy, titanium, or a titanium alloy; and/or
wherein the metal substrate (105, 205, 505, 605, 705) comprises a 3xxx series aluminum alloy, a 5xxx series aluminum alloy, a 6xxx series aluminum alloy, or a 7xxx series aluminum alloy.

8. A system (100, 200, 500, 600, 700) for making a metal product (130, 230, 630), comprising:
a first magnetic field source (120, 220, 520, 625, 720) or first laser source (135) positioned and configured to expose an elongated metal substrate (105, 205, 505, 605, 705), which is a metal sheet, shate or plate, to be moved along a rolling direction (110, 210) past the first magnetic field source (120, 220, 520, 625, 720) or laser source (135) to a first time-varying magnetic field or first laser radiation and positioned and configured to heat at least a first portion (225, 525) of the elongated metal substrate (105, 205, 505, 605, 705) by induction heating or laser heating, wherein the first time-varying magnetic field or first laser radiation is configured to heat at least the first portion (225, 525) of the elongated metal substrate (105, 205, 505, 605, 705) to a first temperature sufficient to increase formability or plasticity of at least the first portion (225, 525) of the elongated metal substrate (105, 205, 505, 605, 705),
wherein the first temperature is from 150 °C to 250 °C,
characterized therein,
that a first roll-forming stand (115, 215, 515, 615, 715) positioned and configured to receive the elongated metal substrate (105, 205, 505, 605, 705) after exposure to the first time-varying magnetic field or laser radiation, wherein the first roll-forming stand (115, 215, 515, 615, 715) comprises at least two rollers arranged to receive the elongated metal substrate (105, 205, 505, 605, 705) and arranged to bend the first portion (225, 525) of the elongated metal substrate (105, 205, 505, 605, 705) after at least the first portion (225, 525) of the elongated metal substrate (105, 205, 505, 605, 705) is cooled to below the first temperature or to ambient temperature.

9. The system (100, 200, 500, 600, 700) of claim 8, wherein the first roll-forming stand (115, 215, 515, 615, 715) is configured to bend the first portion (225, 525) of the elongated metal substrate (105, 205, 505, 605, 705) to form a metal product having a feature with a ratio of bend radius to thickness (r/t) of from 0.1 to 2; and/or
wherein the first time-varying electromagnetic field or first laser radiation is configured to heat at least the first portion (225, 525) of the elongated metal substrate (105, 205, 505, 605, 705) to or above a second temperature for a sufficient time duration to modify a temper of at least the first portion (225, 525) of the elongated metal substrate (105, 205, 505, 605, 705); and/or
wherein the first time-varying electromagnetic field or first laser radiation is configured to heat at least the first portion (225, 525) of the elongated metal substrate (105, 205, 505, 605, 705) to overage at least the first portion (225, 525) of the elongated metal substrate (105, 205, 505, 605, 705); and/or
wherein the first time-varying electromagnetic field or first laser radiation is configured to heat at least the first portion (225, 525) of the elongated metal substrate (105, 205, 505, 605, 705) to modify a corrosion resistance of at least the first portion (225, 525) of the elongated metal substrate (105, 205, 505, 605, 705).

10. The system (100, 200, 500, 600, 700) of claim 8 or 9, further comprising a position actuator coupled to the first magnetic field source (120, 220, 520, 625, 720) for adjusting a distance between the first magnetic field source (120, 220, 520, 625, 720) and the elongated metal substrate (105, 205, 505, 605, 705) to control a rate of heat generated in the elongated metal substrate (105, 205, 505, 605, 705) by the induction heating; and in particular wherein the distance between the first magnetic field source (120, 220, 520, 625, 720) and the elongated metal substrate (105, 205, 505, 605, 705) ranges from 1 mm to 60 mm.

11. The system (100, 200, 500, 600, 700) of any one of claims 8-10, wherein the first magnetic field source (120, 220, 520, 625, 720) comprises one or more permanent magnets coupled to one or more motors for rotating the one or more permanent magnets.

12. The system (100, 200, 500, 600, 700) of claim 11, wherein the one or more permanent magnets are one or more cylindrical magnet and wherein the one or more permanent magnets are configured to be rotated about a cylindrical axis; and/or
wherein the one or more motors have adjustable speeds for controlling the first time-varying magnetic field; and/or
wherein the one or more motors are configured to have rotation speeds of from 100 revolutions per minute to 30000 revolutions per minute; and/or
wherein the one or more permanent magnets are configured to have surface field strengths of from 1000 Gauss to 10000 Gauss; and/or
wherein the one or more permanent magnets are configured to have residual flux densities of from 10000 Gauss to 15000 Gauss.

13. The system (100, 200, 500, 600, 700) of any one of claims 8-12, the first magnetic field source (120, 220, 520, 625, 720) is configured to expose the metal substrate (105, 205, 505, 605, 705) to the first time-varying magnetic field for an exposure time of from 0.1 seconds to 300 seconds; and/or
wherein the first magnetic field source (120, 220, 520, 625, 720) comprises one or more electromagnetic coils and one or more power supplies electrically coupled to the one or more electromagnetic coils; and in particular wherein the power supply has one or more of a variable output voltage, a variable output current, or a variable output frequency for controlling the first time-varying magnetic field; and/or
further comprising:
a second magnetic field source (120, 220, 520, 625, 720) or second laser source (135) positioned and configured to expose the elongated metal substrate (105, 205, 505, 605, 705) to be moved along the rolling direction (110, 210) past the second magnetic field source (120, 220, 520, 625, 720) or second laser source (135) to a second time-varying magnetic field or second laser radiation and positioned and configured to heat a second portion (525) of the elongated metal substrate (105, 205, 505, 605, 705) by induction heating or laser heating, wherein the second magnetic field source (120, 220, 520, 625, 720) or second laser source (135) is positioned to heat the second portion (525) of the elongated metal substrate (105, 205, 505, 605, 705) to or above a second temperature sufficient to increase formability or plasticity of the second portion (525) of the elongated metal substrate (105, 205, 505, 605, 705) and is positioned after the at least two rollers of the first roll-forming stand (115, 215, 515, 615, 715); and/or
wherein the metal substrate (105, 205, 505, 605, 705) comprises aluminum, an aluminum alloy, a steel alloy, stainless steel, magnesium, a magnesium alloy, copper, a copper alloy, titanium, or a titanium alloy; and/or
wherein the metal substrate (105, 205, 505, 605, 705) comprises a 3xxx series aluminum alloy, a 5xxx series aluminum alloy, a 6xxx series aluminum alloy, or a 7xxx series aluminum alloy.

## Patentansprüche

1. Verfahren zur Herstellung eines Metallprodukts (130, 230, 630), umfassend:
Exponieren eines länglichen Metallsubstrats (105, 205, 505, 605, 705), das ein(e) Metallblech, -shate oder -platte ist, einem ersten zeitveränderlichen Magnetfeld oder einer ersten Laserstrahlung, um zumindest einen ersten Abschnitt (225, 525) des länglichen Metallsubstrats (105, 205, 505, 605, 705) durch Induktionsheizen oder Laserheizen zu erhitzen, wenn das längliche Metallsubstrat (105, 205, 505, 605, 705) entlang einer Walzrichtung (110, 210) an einer ersten Magnetfeldquelle (120, 220, 520, 625, 720), die das erste zeitveränderliche Magnetfeld erzeugt, oder einer Laserquelle (135), die die erste Laserstrahlung erzeugt, vorbeibewegt wird, wobei das erste zeitveränderliche Magnetfeld oder die erste Laserstrahlung zumindest den ersten Abschnitt (225, 525) des länglichen Metallsubstrats (105, 205, 505, 605, 705) auf eine erste Temperatur erhitzt, die ausreicht, um die Formbarkeit oder Plastizität von zumindest dem ersten Abschnitt (225, 525) des länglichen Metallsubstrats zu erhöhen, wobei die erste Temperatur von 150 °C bis 250 °C beträgt,
**gekennzeichnet durch**:
Passieren des länglichen Metallsubstrats (105, 205, 505, 605, 705) zwischen zumindest zwei Walzen eines ersten Walzformungsständers (115, 215, 515, 615, 715), um den ersten Abschnitt (225, 525) des länglichen Metallsubstrats (105, 205, 505, 605, 705) zu biegen, und
dass das Passieren des länglichen Metallsubstrats (105, 205, 505, 605, 705) zwischen zumindest zwei Walzen des ersten Walzformungsständers (115, 215, 515, 615, 715), um den ersten Abschnitt (225, 525) des länglichen Metallsubstrats (105, 205, 505, 605, 705) zu biegen, stattfindet, nachdem der erste Abschnitt (225, 525) des länglichen Metallsubstrats (105, 205, 505, 605, 705) unter die erste Temperatur oder auf Umgebungstemperatur abgekühlt ist.

2. Das Verfahren von Anspruch 1, wobei das Exponieren des länglichen Metallsubstrats (105, 205, 505, 605, 705) dem ersten zeitveränderlichen Magnetfeld oder der ersten Laserstrahlung eine Gesamtheit des länglichen Metallsubstrats (105, 205, 505, 605, 705) auf die erste Temperatur erhitzt, bevor das längliche Metallsubstrat (105, 205, 505, 605, 705) zwischen den zumindest zwei Walzen des Walzformungsständers (115, 215, 515, 615, 715) passiert.

3. Das Verfahren von einem der Ansprüche 1 bis 2, wobei eine Temperatur des Walzformungsständers (115, 215, 515, 615, 715) oder der zumindest zwei Walzen des Walzformungsständers (115, 215, 515, 615, 715) kleiner als die erste Temperatur ist; und/oder
wobei der erste Walzformungsständer (115, 215, 515, 615, 715) den ersten Abschnitt (225, 525) des länglichen Metallsubstrats (105, 205, 505, 605, 705) biegt, um ein Metallprodukt zu bilden, das ein Merkmal mit einem Verhältnis von Biegeradius zu Dicke (r/t) von 0,1 bis 2 aufweist; und/oder
wobei das erste zeitveränderliche Magnetfeld oder die erste Laserstrahlung zumindest den ersten Abschnitt (225, 525) des länglichen Metallsubstrats (105, 205, 505, 605, 705) auf oder über eine zweite Temperatur für eine Zeitdauer erhitzt, die ausreicht, um eine Temperung des ersten Abschnitts (225, 525) des länglichen Metallsubstrats (105, 205, 505, 605, 705) zu modifizieren; und/oder
wobei das erste zeitveränderliche Magnetfeld oder die erste Laserstrahlung zumindest den ersten Abschnitt (225, 525) des länglichen Metallsubstrats (105, 205, 505, 605, 705) erhitzt und zumindest den ersten Abschnitt (225, 525) des länglichen Metallsubstrats (105, 205, 505, 605, 705) übervergütet; und/oder
wobei das erste zeitveränderliche Magnetfeld oder die erste Laserstrahlung zumindest den ersten Abschnitt (225, 525) des länglichen Metallsubstrats (105, 205, 505, 605, 705) erhitzt und eine Korrosionsbeständigkeit von zumindest dem ersten Abschnitt (225, 525) des länglichen Metallsubstrats (105, 205, 505, 605, 705) modifiziert; und/oder
das ferner aufweist, einen Abstand zwischen der ersten Magnetfeldquelle (120, 220, 520, 625, 720) und dem länglichen Metallsubstrat (105, 205, 505, 605, 705) zu justieren, um eine durch das Induktionsheizen in dem länglichen Metallsubstrat (105, 205, 505, 605, 705) erzeugte Erwärmungsrate zu steuern; und wobei insbesondere der Abstand zwischen der ersten Magnetfeldquelle (120, 220, 520, 625, 720) und dem länglichen Metallsubstrat (105, 205, 505, 605, 705) von 1 mm bis 60 mm reicht.

4. Das Verfahren von einem der Ansprüche 1 bis 3, wobei die erste Magnetfeldquelle (120, 220, 520, 625, 720) einen oder mehrere Permanentmagnete aufweist, die mit einem oder mehreren Motoren zum Drehen des einen oder der mehreren Permanentmagneten gekoppelt ist oder sind.

5. Das Verfahren von Anspruch 4, wobei der eine oder die mehreren Permanentmagnete um eine zylindrische Struktur herum angeordnet sind, und wobei die zylindrische Struktur um eine Zylinderachse herum gedreht wird, um das längliche Metallsubstrat (105, 205, 505, 605, 705) dem ersten zeitveränderlichen Magnetfeld zu exponieren; und/oder
wobei der eine oder die mehreren Motoren einstellbare Geschwindigkeiten haben, um das erste zeitveränderliche Magnetfeld zu steuern; und/oder
wobei der eine oder die mehreren Motoren Drehzahlen von 100 Umdrehungen pro Minute bis 30000 Umdrehungen pro Minute haben; und/oder
wobei der eine oder die mehreren Dauermagnete Oberflächenfeldstärken von 1000 Gauß bis 10000 Gauß haben; und/oder
wobei der eine oder die mehreren Dauermagnete Restfluxdichten von 10000 Gauß bis 15000 Gauß haben.

6. Das Verfahren von einem der Ansprüche 1 bis 5, wobei eine Expositionszeit des länglichen Metallsubstrats (105, 205, 505, 605, 705) dem ersten zeitveränderlichen Magnetfeld oder der ersten Laserstrahlung 0,1 Sekunden bis 300 Sekunden beträgt; und/oder
wobei die erste Magnetfeldquelle (120, 220, 520, 625, 720) eine oder mehrere elektromagnetische Wicklungen und eine oder mehrere Stromversorgungen aufweist, die mit der einen oder den mehreren elektromagnetischen Wicklungen elektrisch verbunden sind; und wobei insbesondere die eine oder mehreren Stromversorgungen eine oder mehr einer variablen Ausgangsspannung, eines variablen Ausgangsstroms oder einer variablen Ausgangsfrequenz haben, um das erste zeitveränderliche Magnetfeld zu steuern.

7. Das Verfahren von einem der Ansprüche 1 bis 6, das ferner aufweist:
Exponieren des länglichen Metallsubstrats (105, 205, 505, 605, 705) einem zweiten zeitveränderlichen Magnetfeld oder einer zweiten Laserstrahlung, um einen zweiten Abschnitt (525) des länglichen Metallsubstrats (105, 205, 505, 605, 705) durch Induktionsheizen oder Laserheizen zu erhitzen, wenn das längliche Metallsubstrat (105, 205, 505, 605, 705) entlang der Walzrichtung (110, 210) an einer zweiten Magnetfeldquelle (120, 220, 520, 625, 720), die das zweite zeitveränderliche Magnetfeld erzeugt, oder einer zweiten Laserquelle (135), die die zweite Laserstrahlung erzeugt, vorbeibewegt wird, wobei das zweite zeitveränderliche Magnetfeld oder die zweite Laserstrahlung den zweiten Abschnitt (525) der länglichen Metalloberfläche auf oder über eine zweite Temperatur erhitzt, die ausreicht, um die Formbarkeit oder Plastizität des zweiten Abschnitts (525) des länglichen Metallsubstrats (105, 205, 505, 605, 705) zu erhöhen, nachdem der erste Abschnitt (525) des länglichen Metallsubstrats (105, 205, 505, 605, 705) durch die zumindest zwei Walzen des ersten Walzformungsständers (115, 215, 515, 615, 715) gebogen ist; und/oder
wobei das Metallsubstrat (105, 205, 505, 605, 705) Aluminium, eine Aluminiumlegierung, eine Stahllegierung, rostfreien Stahl, Magnesium, eine Magnesiumlegierung, Kupfer, eine Kupferlegierung, Titan oder eine Titanlegierung aufweist; und/oder
wobei das Metallsubstrat (105, 205, 505, 605, 705) eine Aluminiumlegierung der 3xxx-Serie, eine Aluminiumlegierung der 5xxx-Serie, eine Aluminiumlegierung der 6xxx-Serie oder eine Aluminiumlegierung der 7xxx-Serie aufweist.

8. System (100, 200, 500, 600, 700) zur Herstellung eines Metallprodukts (130, 230, 630), das aufweist:
eine erste Magnetfeldquelle (120, 220, 520, 625, 720) oder eine erste Laserquelle (135), die positioniert und konfiguriert ist, um ein längliches Metallsubstrat (105, 205, 505, 605, 705), das ein(e) Metallblech, -shate oder -platte ist, das entlang einer Walzrichtung (110, 210) an der ersten Magnetfeldquelle (120, 220, 520, 625, 720) oder der ersten Laserquelle (135) vorbei zu bewegen ist, einem ersten zeitveränderlichen Magnetfeld oder einer ersten Laserstrahlung zu exponieren, und die positioniert und konfiguriert ist, um zumindest einen ersten Abschnitt (225, 525) des länglichen Metallsubstrats (105, 205, 505, 605, 705) durch Induktionsheizen oder Laserheizen zu erhitzen, wobei das erste zeitveränderliche Magnetfeld oder die erste Laserstrahlung konfiguriert ist, um zumindest den ersten Abschnitt (225, 525) des länglichen Metallsubstrats (105, 205, 505, 605, 705) auf eine erste Temperatur zu erhitzen, die ausreicht, um die Formbarkeit oder Plastizität von zumindest dem ersten Abschnitt (225, 525) des länglichen Metallsubstrats (105, 205, 505, 605, 705) zu erhöhen,
wobei die erste Temperatur von 150 °C bis 250 °C beträgt,
**dadurch gekennzeichnet, dass**
ein erster Walzformungsständer (115, 215, 515, 615, 715) positioniert und konfiguriert ist, um das längliche Metallsubstrat (105, 205, 505, 605, 705) nach der Exposition dem ersten zeitveränderlichen Magnetfeld oder der Laserstrahlung zu empfangen, wobei der erste Walzformungsständer (115, 215, 515, 615, 715) zumindest zwei Walzen aufweist, die angeordnet sind, um das längliche Metallsubstrat (105, 205, 505, 605, 705) zu empfangen, und angeordnet sind, um den ersten Abschnitt (225, 525) des länglichen Metallsubstrats (105, 205, 505, 605, 705) zu biegen, nachdem zumindest der erste Abschnitt (225, 525) des länglichen Metallsubstrats (105, 205, 505, 605, 705) auf unter die erste Temperatur oder auf Umgebungstemperatur abgekühlt ist.

9. Das System (100, 200, 500, 600, 700) von Anspruch 8, wobei
der erste Walzformungsständer (115, 215, 515, 615, 715) konfiguriert ist, um den ersten Abschnitt (225, 525) des länglichen Metallsubstrats (105, 205, 505, 605, 705) zu biegen, um ein Metallprodukt zu bilden, das ein Merkmal mit einem Verhältnis von Biegeradius zu Dicke (r/t) von 0,1 bis 2 aufweist; und/oder
wobei das erste zeitveränderliche Magnetfeld oder die erste Laserstrahlung konfiguriert ist, um zumindest den ersten Abschnitt (225, 525) des länglichen Metallsubstrats (105, 205, 505, 605, 705) auf oder über eine zweite Temperatur für eine Zeitdauer zu erhitzen, die ausreicht, um eine Temperung des ersten Abschnitts (225, 525) des länglichen Metallsubstrats (105, 205, 505, 605, 705) zu modifizieren; und/oder
wobei das erste zeitveränderliche Magnetfeld oder die erste Laserstrahlung konfiguriert ist, um zumindest den ersten Abschnitt (225, 525) des länglichen Metallsubstrats (105, 205, 505, 605, 705) zu erhitzen und zumindest den ersten Abschnitt (225, 525) des länglichen Metallsubstrats (105, 205, 505, 605, 705) übervergütet; und/oder
wobei das erste zeitveränderliche Magnetfeld oder die erste Laserstrahlung konfiguriert ist, um zumindest den ersten Abschnitt (225, 525) des länglichen Metallsubstrats (105, 205, 505, 605, 705) zu erhitzen, um eine Korrosionsbeständigkeit von zumindest dem ersten Abschnitt (225, 525) des länglichen Metallsubstrats (105, 205, 505, 605, 705) zu modifizieren.

10. Das System (100, 200, 500, 600, 700) von Anspruch 8 oder 9, das ferner einen Positionsaktuator aufweist, der mit der ersten Magnetfeldquelle (120, 220, 520, 625, 720) gekoppelt ist, um einen Abstand zwischen der ersten Magnetfeldquelle (120, 220, 520, 625, 720) und dem länglichen Metallsubstrat (105, 205, 505, 605, 705) zu justieren, um eine durch das Induktionsheizen in dem länglichen Metallsubstrat (105, 205, 505, 605, 705) erzeugte Erwärmungsrate zu steuern; und wobei insbesondere der Abstand zwischen der ersten Magnetfeldquelle (120, 220, 520, 625, 720) und dem länglichen Metallsubstrat (105, 205, 505, 605, 705) von 1 mm bis 60 mm reicht.

11. Das System (100, 200, 500, 600, 700) von einem der Ansprüche 8 bis 10, wobei die erste Magnetfeldquelle (120, 220, 520, 625, 720) einen oder mehrere Permanentmagnete aufweist, die mit einem oder mehreren Motoren zum Drehen des einen oder der mehreren Permanentmagneten gekoppelt ist oder sind.

12. Das System (100, 200, 500, 600, 700) nach Anspruch 11, wobei der eine oder die mehreren Permanentmagnete ein oder mehrere zylindrische Magnete sind und wobei der eine oder die mehreren Permanentmagnete zur Drehung um eine Zylinderachse herum konfiguriert sind; und/oder
wobei der eine oder die mehreren Motoren einstellbare Geschwindigkeiten haben, um das erste zeitveränderliche Magnetfeld zu steuern; und/oder
wobei der eine oder die mehreren Motoren Drehzahlen von 100 Umdrehungen pro Minute bis 30000 Umdrehungen pro Minute haben; und/oder
wobei der eine oder die mehreren Dauermagnete konfiguriert sind, um Oberflächenfeldstärken von 1000 Gauß bis 10000 Gauß zu haben; und/oder
wobei der eine oder die mehreren Dauermagnete konfiguriert sind, um Restfluxdichten von 10000 Gauß bis 15000 Gauß zu haben.

13. Das System (100, 200, 500, 600, 700) nach einem der Ansprüche 8 bis 12, wobei die erste Magnetfeldquelle (120, 220, 520, 625, 720) konfiguriert ist, um das Metallsubstrat (105, 205, 505, 605, 705) dem ersten zeitveränderlichen Magnetfeld für eine Expositionszeit von 0,1 Sekunden bis 300 Sekunden zu exponieren; und/oder
wobei die erste Magnetfeldquelle (120, 220, 520, 625, 720) eine oder mehrere elektromagnetische Wicklungen und eine oder mehrere Stromversorgungen aufweist, die mit der einen oder den mehreren elektromagnetischen Wicklungen elektrisch verbunden sind; und wobei insbesondere die eine oder mehreren Stromversorgungen eine oder mehr einer variablen Ausgangsspannung, eines variablen Ausgangsstroms oder einer variablen Ausgangsfrequenz haben, um das erste zeitveränderliche Magnetfeld zu steuern; und/oder
das ferner umfasst:
eine zweite Magnetfeldquelle (120, 220, 520, 625, 720) oder eine zweite Laserquelle (135), die positioniert und konfiguriert ist, um das längliche Metallsubstrat (105, 205, 505, 605, 705), das entlang der Walzrichtung (110, 210) an der zweiten Magnetfeldquelle (120, 220, 520, 625, 720) oder der zweiten Laserquelle (135) vorbei zu bewegen ist, einem zweiten zeitveränderlichen Magnetfeld oder einer zweiten Laserstrahlung zu exponieren, und die positioniert und konfiguriert ist, um einen zweiten Abschnitt (525) des länglichen Metallsubstrats (105, 205, 505, 605, 705, 705) durch Induktionsheizen oder Laserheizen zu erhitzen, wobei die zweite Magnetfeldquelle (120, 220, 520, 625, 720) oder die zweite Laserquelle (135) positioniert und konfiguriert ist, um den zweiten Abschnitt (525) des länglichen Metallsubstrats (105, 205, 505, 605, 705) auf oder über eine zweite Temperatur zu erhitzen, die ausreicht, um die Formbarkeit oder Plastizität des zweiten Abschnitts (525) des länglichen Metallsubstrats (105, 205, 505, 605, 705) zu erhöhen, und nach den zumindest zwei Walzen des ersten Walzformungsständers (115, 215, 515, 615, 715) angeordnet ist; und/oder
wobei das Metallsubstrat (105, 205, 505, 605, 705) Aluminium, eine Aluminiumlegierung, eine Stahllegierung, rostfreien Stahl, Magnesium, eine Magnesiumlegierung, Kupfer, eine Kupferlegierung, Titan oder eine Titanlegierung aufweist; und/oder
wobei das Metallsubstrat (105, 205, 505, 605, 705) eine Aluminiumlegierung der 3xxx-Serie, eine Aluminiumlegierung der 5xxx-Serie, eine Aluminiumlegierung der 6xxx-Serie oder eine Aluminiumlegierung der 7xxx-Serie aufweist.

## Revendications

1. Procédé de fabrication d'un produit métallique (130, 230, 630), consistant à :
exposer un substrat métallique allongé (105, 205, 505, 605, 705), qui est une feuille, une plaque ou un plateau métallique, à un premier champ magnétique variable dans le temps ou à un premier rayonnement laser pour chauffer au moins une première partie (225, 525) du substrat métallique allongé (105, 205, 505, 605, 705) par chauffage par induction ou par chauffage laser lorsque le substrat métallique allongé (105, 205, 505, 605, 705) est déplacé le long d'une direction de laminage (110, 210) devant une première source de champ magnétique (120, 220, 520, 625, 720) générant le premier champ magnétique variable dans le temps ou devant une source laser (135) générant le premier rayonnement laser, le premier champ magnétique variable dans le temps ou le premier rayonnement laser chauffant au moins la première partie (225, 525) du substrat métallique allongé (105, 205, 505, 605, 705) à une première température suffisante pour augmenter la formabilité ou la plasticité d'au moins la première partie (225, 525) du substrat métallique allongé ; la première température étant comprise entre 150 °C et 250 °C,
**caractérisé par** l'étape consistant à :
faire passer le substrat métallique allongé (105, 205, 505, 605, 705) entre au moins deux rouleaux d'une première cage de formage par laminage (115, 215, 515, 615, 715) pour plier la première partie (225, 525) du substrat métallique allongé (105, 205, 505, 605, 705),
dans lequel le passage du substrat métallique allongé (105, 205, 505, 605, 705) entre au moins deux rouleaux de la première cage de formage par laminage (115, 215, 515, 615, 715) pour plier la première partie (225, 525) du substrat métallique allongé (105, 205, 505, 605, 705) a lieu après que la première partie (225, 525) du substrat métallique allongé (105, 205, 505, 605, 705) a été refroidie en dessous de la première température ou à la température ambiante.

2. Procédé selon la revendication 1,
dans lequel l'exposition du substrat métallique allongé (105, 205, 505, 605, 705) au premier champ magnétique variable dans le temps ou au premier rayonnement laser chauffe la totalité du substrat métallique allongé (105, 205, 505, 605, 705) à la première température avant que le substrat métallique allongé (105, 205, 505, 605, 705) passe entre lesdits au moins deux rouleaux de la cage de formage par laminage (115, 215, 515, 615, 715).

3. Procédé selon la revendication 1,
dans lequel une température de la cage de formage par laminage (115, 215, 515, 615, 715) ou desdits au moins deux rouleaux de la cage de formage par laminage (115, 215, 515, 615, 715) est inférieure à la première température ; et/ou
la première cage de formage par laminage (115, 215, 515, 615, 715) plie la première partie (225, 525) du substrat métallique allongé (105, 205, 505, 605, 705) pour former un produit métallique présentant une caractéristique avec un rapport entre le rayon de courbure et l'épaisseur (r/t) compris entre 0,1 et 2 ; et/ou
le premier champ magnétique variable dans le temps ou le premier rayonnement laser chauffe au moins la première partie (225, 525) du substrat métallique allongé (105, 205, 505, 605, 705) jusqu'à une deuxième température ou au-dessus de celle-ci pendant une durée suffisante afin de modifier la trempe de la première partie (225, 525) du substrat métallique allongé (105, 205, 505, 605, 705) ; et/ou
le premier champ magnétique variable dans le temps ou le premier rayonnement laser chauffe au moins la première partie (225, 525) du substrat métallique allongé (105, 205, 505, 605, 705) et fait vieillir au moins la première partie (225, 525) du substrat métallique allongé (105, 205, 505, 605, 705) ; et/ou
le premier champ magnétique variable dans le temps ou le premier rayonnement laser chauffe au moins la première partie (225, 525) du substrat métallique allongé (105, 205, 505, 605, 705) et modifie la résistance à la corrosion d'au moins la première partie (225, 525) du substrat métallique allongé (105, 205, 505, 605, 705) ; et/ou
consistant en outre à régler une distance entre la première source de champ magnétique (120, 220, 520, 625, 720) et le substrat métallique allongé (105, 205, 505, 605, 705) pour contrôler un taux de chaleur généré dans le substrat métallique allongé (105, 205, 505, 605, 705) par le chauffage par induction ; et en particulier la distance entre la première source de champ magnétique (120, 220, 520, 625, 720) et le substrat métallique allongé (105, 205, 505, 605, 705) est comprise entre 1 mm et 60 mm.

4. Procédé selon l'une des revendications 1 à 3,
dans lequel la première source de champ magnétique (120, 220, 520, 625, 720) comprend un ou plusieurs aimants permanents couplés à un ou plusieurs moteurs pour faire tourner ledit ou lesdits aimants permanents.

5. Procédé selon la revendication 4,
dans lequel ledit ou lesdits aimants permanents sont disposés autour d'une structure cylindrique, et la structure cylindrique est tournée autour d'un axe de cylindre pour exposer le substrat métallique allongé (105, 205, 505, 605, 705) au premier champ magnétique variable dans le temps ; et/ou
ledit ou lesdits moteurs ont des vitesses réglables pour contrôler le premier champ magnétique variable dans le temps ; et/ou
ledit ou lesdits moteurs ont des vitesses de rotation comprises entre 100 tours par minute et 30 000 tours par minute ; et/ou
ledit ou lesdits aimants permanents ont des intensités de champ de surface comprises entre 1 000 Gauss et 10 000 Gauss ; et/ou
ledit ou lesdits aimants permanents ont des densités de flux résiduel comprises entre 10 000 Gauss et 15 000 Gauss.

6. Procédé selon l'une des revendications 1 à 5,
dans lequel le temps d'exposition du substrat métallique allongé (105, 205, 505, 605, 705) au premier champ magnétique variable dans le temps ou au premier rayonnement laser est compris entre 0,1 seconde et 300 secondes ; et/ou
la première source de champ magnétique (120, 220, 520, 625, 720) comprend une ou plusieurs bobines électromagnétiques et une ou plusieurs alimentations électriques couplées électriquement à ladite ou auxdites bobines électromagnétiques ; et en particulier, ladite ou lesdites alimentations électriques ont un ou plusieurs des éléments suivants : une tension de sortie variable, un courant de sortie variable ou une fréquence de sortie variable, pour contrôler le premier champ magnétique variable dans le temps.

7. Procédé selon l'une des revendications 1 à 6, consistant en outre à :
exposer le substrat métallique allongé (105, 205, 505, 605, 705) à un deuxième champ magnétique variable dans le temps ou à un deuxième rayonnement laser pour chauffer une deuxième partie (525) du substrat métallique allongé (105, 205, 505, 605, 705) par chauffage par induction ou par chauffage laser lorsque le substrat métallique allongé (105, 205, 505, 605, 705) est déplacé le long de la direction de laminage devant une deuxième source de champ magnétique (120, 220, 520, 625, 720) générant le deuxième champ magnétique variable dans le temps ou devant une deuxième source laser (135) générant le deuxième rayonnement laser, le deuxième champ magnétique variable dans le temps ou le deuxième rayonnement laser chauffant la deuxième partie (525) de la surface métallique allongée jusqu'à une deuxième température ou au-dessus de celle-ci, suffisante pour augmenter la formabilité ou la plasticité de la deuxième partie (525) du substrat métallique allongé (105, 205, 505, 605, 705) après que la première partie (525) du substrat métallique allongé (105, 205, 505, 605, 705) a été pliée par lesdits au moins deux rouleaux de la première cage de formage par laminage (115, 215, 515, 615, 715) ; et/ou
dans lequel le substrat métallique (105, 205, 505, 605, 705) comprend de l'aluminium, un alliage d'aluminium, un alliage d'acier, de l'acier inoxydable, du magnésium, un alliage de magnésium, du cuivre, un alliage de cuivre, du titane ou un alliage de titane ; et/ou
dans lequel le substrat métallique (105, 205, 505, 605, 705) comprend un alliage d'aluminium de la série 3xxx, un alliage d'aluminium de la série 5xxx, un alliage d'aluminium de la série 6xxx ou un alliage d'aluminium de la série 7xxx.

8. Système (100, 200, 500, 600, 700) de fabrication d'un produit métallique (130, 230, 630), comprenant :
une première source de champ magnétique (120, 220, 520, 625, 720) ou une première source laser (135) positionnée et configurée pour exposer un substrat métallique allongé (105, 205, 505, 605, 705), qui est une feuille, une plaque ou un plateau métallique, à déplacer le long d'une direction de laminage (110, 210) devant la première source de champ magnétique (120, 220, 520, 625, 720) ou devant la source laser (135), à un premier champ magnétique variable dans le temps ou à un premier rayonnement laser, positionné et configuré pour chauffer au moins une première partie (225, 525) du substrat métallique allongé (105, 205, 505, 605, 705) par chauffage par induction ou par chauffage laser, le premier champ magnétique variable dans le temps ou le premier rayonnement laser étant configuré pour chauffer au moins la première partie (225, 525) du substrat métallique allongé (105, 205, 505, 605, 705) à une première température suffisante pour augmenter la formabilité ou la plasticité d'au moins la première partie (225, 525) du substrat métallique allongé (105, 205, 505, 605, 705) ;
la première température étant comprise entre 150 °C et 250 °C,
**caractérisé en ce que**
une première cage de formage par laminage (115, 215, 515, 615, 715) est positionnée et configurée pour recevoir le substrat métallique allongé (105, 205, 505, 605, 705) après exposition au premier champ magnétique variable dans le temps ou au rayonnement laser, la première cage de formage par laminage (115, 215, 515, 615, 715) comprenant au moins deux rouleaux agencés pour recevoir le substrat métallique allongé (105, 205, 505, 605, 705) et agencés pour plier la première partie (225, 525) du substrat métallique allongé (105, 205, 505, 605, 705) après qu'au moins la première partie (225, 525) du substrat métallique allongé (105, 205, 505, 605, 705) a été refroidie en dessous de la première température ou à la température ambiante.

9. Système (100, 200, 500, 600, 700) selon la revendication 8,
dans lequel la première cage de formage par laminage (115, 215, 515, 615, 715) est configurée pour plier la première partie (225, 525) du substrat métallique allongé (105, 205, 505, 605, 705) pour former un produit métallique présentant une caractéristique avec un rapport entre le rayon de courbure et l'épaisseur (r/t) compris entre 0,1 et 2 ; et/ou
le premier champ électromagnétique variable dans le temps ou le premier rayonnement laser est configuré pour chauffer au moins la première partie (225, 525) du substrat métallique allongé (105, 205, 505, 605, 705) à une deuxième température ou au-dessus de celle-ci pendant une durée suffisante afin de modifier la trempe d'au moins la première partie (225, 525) du substrat métallique allongé (105, 205, 505, 605, 705) ; et/ou
le premier champ électromagnétique variable dans le temps ou le premier rayonnement laser est configuré pour chauffer au moins la première partie (225, 525) du substrat métallique allongé (105, 205, 505, 605, 705) pour faire vieillir au moins la première partie (225, 525) du substrat métallique allongé (105, 205, 505, 605, 705) ; et/ou
le premier champ électromagnétique variable dans le temps ou le premier rayonnement laser est configuré pour chauffer au moins la première partie (225, 525) du substrat métallique allongé (105, 205, 505, 605, 705) afin de modifier la résistance à la corrosion d'au moins la première partie (225, 525) du substrat métallique allongé (105, 205, 505, 605, 705).

10. Système (100, 200, 500, 600, 700) selon la revendication 8 ou 9,
comprenant en outre un actionneur de position couplé à la première source de champ magnétique (120, 220, 520, 625, 720) pour régler une distance entre la première source de champ magnétique (120, 220, 520, 625, 720) et le substrat métallique allongé (105, 205, 505, 605, 705) afin de contrôler un taux de chaleur généré dans le substrat métallique allongé (105, 205, 505, 605, 705) par le chauffage par induction ; en particulier, la distance entre la première source de champ magnétique (120, 220, 520, 625, 720) et le substrat métallique allongé (105, 205, 505, 605, 705) étant comprise entre 1 mm et 60 mm.

11. Système (100, 200, 500, 600, 700) selon l'une des revendications 8 à 10, dans lequel la première source de champ magnétique (120, 220, 520, 625, 720) comprend un ou plusieurs aimants permanents couplés à un ou plusieurs moteurs pour faire tourner ledit ou lesdits aimants permanents.

12. Système (100, 200, 500, 600, 700) selon la revendication 11,
dans lequel ledit ou lesdits aimants permanents sont un ou plusieurs aimants cylindriques, et ledit ou lesdits aimants permanents sont configurés pour être tournés autour d'un axe de cylindre ; et/ou
ledit ou lesdits moteurs ont des vitesses réglables pour contrôler le premier champ magnétique variable dans le temps ; et/ou
ledit ou lesdits moteurs sont configurés pour avoir des vitesses de rotation comprises entre 100 tours par minute et 30 000 tours par minute ; et/ou
ledit ou lesdits aimants permanents sont configurés pour avoir des intensités de champ de surface compris entre 1 000 Gauss et 10 000 Gauss ; et/ou
ledit ou lesdits aimants permanents sont configurés pour avoir des densités de flux résiduel compris entre 10 000 Gauss et 15 000 Gauss.

13. Système (100, 200, 500, 600, 700) selon l'une des revendications 8 à 12, dans lequel la première source de champ magnétique (120, 220, 520, 625, 720) est configurée pour exposer le substrat métallique (105, 205, 505, 605, 705) au premier champ magnétique variable dans le temps pendant une durée d'exposition comprise entre 0,1 seconde et 300 secondes ; et/ou
la première source de champ magnétique (120, 220, 520, 625, 720) comprend une ou plusieurs bobines électromagnétiques et une ou plusieurs alimentations électriques couplées électriquement à ladite ou auxdites bobines électromagnétiques ; et en particulier, l'alimentation électrique présente un ou plusieurs des éléments suivants : une tension de sortie variable, un courant de sortie variable ou une fréquence de sortie variable, pour contrôler le premier champ magnétique variable dans le temps ; et/ou
comprenant en outre
une deuxième source de champ magnétique (120, 220, 520, 625, 720) ou une deuxième source laser (135) positionnée et configurée pour exposer le substrat métallique allongé (105, 205, 505, 605, 705), à déplacer le long de la direction de laminage devant la deuxième source de champ magnétique (120, 220, 520, 625, 720) ou devant la deuxième source laser (135), à un deuxième champ magnétique variable dans le temps ou à un deuxième rayonnement laser, et positionnée et configurée pour chauffer une deuxième partie (525) du substrat métallique allongé (105, 205, 505, 605, 705) par chauffage par induction ou chauffage laser, la deuxième source de champ magnétique (120, 220, 520, 625, 720) ou la deuxième source laser (135) étant positionnée pour chauffer la deuxième partie (525) du substrat métallique allongé (105, 205, 505, 605, 705) jusqu'à une deuxième température ou au-dessus de celle-ci, suffisante pour augmenter la formabilité ou la plasticité de la deuxième partie (525) du substrat métallique allongé (105, 205, 505, 605, 705), et étant positionnée après lesdits au moins deux rouleaux de la première cage de formage par laminage (115, 215, 515, 615, 715) ; et/ou
le substrat métallique (105, 205, 505, 605, 705) comprend de l'aluminium, un alliage d'aluminium, un alliage d'acier, de l'acier inoxydable, du magnésium, un alliage de magnésium, du cuivre, un alliage de cuivre, du titane ou un alliage de titane ; et/ou
le substrat métallique (105, 205, 505, 605, 705) comprend un alliage d'aluminium de la série 3xxx, un alliage d'aluminium de la série 5xxx, un alliage d'aluminium de la série 6xxx ou un alliage d'aluminium de la série 7xxx.
